(19) Europäisches Patentamt
European Patent Office
Office européen des brevets

(11) **EP 4 430 447 B1**

(12) **EUROPEAN PATENT SPECIFICATION**

(45) Date of publication and mention
of the grant of the patent:
**05.08.2026   Bulletin 2026/32**

(21) Application number: **22830973.8**

(22) Date of filing: **28.10.2022**

(51) International Patent Classification (IPC):
*G02B 27/01* *(2006.01)*

(52) Cooperative Patent Classification (CPC):
**G02B 27/0172; G02B 27/0081**

(86) International application number:
**PCT/US2022/048178**

(87) International publication number:
**WO 2023/086218 (19.05.2023 Gazette 2023/20)**

(54) **METHOD FOR DESIGNING A METASURFACE WAVEGUIDE COUPLER FOR DISPLAY UNIT**

VERFAHREN ZUR ENTWICKLUNG EINES METAOBERFLÄCHEN-WELLENLEITERKOPPLERS FÜR ANZEIGEEINHEIT

MÉTHODE DE CONCEPTION D'UN COUPLEUR DE GUIDE D'ONDES À MÉTASURFACE POUR UNITÉ D'AFFICHAGE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority:   **09.11.2021   US 202163277194 P**

(43) Date of publication of application:
**18.09.2024   Bulletin 2024/38**

(73) Proprietor: **Corning Incorporated**
**Corning, New York 14831 (US)**

(72) Inventors:
• **KOCABAS, Sukru Ekin**
**Corning, New York 14830 (US)**
• **NELSON, Cameron Robert**
**Elmira, New York 14903 (US)**
• **YANG, Jun**
**Horseheads, New York 14845 (US)**
• **ZHU, Alexander Yutong**
**Sunnyvale, California 94086 (US)**

(74) Representative: **Elkington and Fife LLP**
**Prospect House**
**8 Pembroke Road**
**Sevenoaks, Kent TN13 1XR (GB)**

(56) References cited:
• **SEYEDEH MAHSA KAMALI ET AL: "Angle-multiplexed metasurfaces: encoding independent wavefronts in a single metasurface under different illumination angles", ARXIV.ORG, CORNELL UNIVERSITY LIBRARY, 201 OLIN LIBRARY CORNELL UNIVERSITY ITHACA, NY 14853, 7 November 2017 (2017-11-07), XP081285830**

**Description**

TECHNICAL FIELD

Embodiments pertain to a metasurface waveguide coupler. Some embodiments relate to techniques for designing a metasurface waveguide coupler for a display unit.

BACKGROUND

Display units, for example display units used in augmented reality (AR) or virtual reality (VR) devices, may refract light of specified wavelength(s). Techniques for designing and fabricating surfaces that optimally refract such light may be desirable.

Seyedeh Mahsa Kamali et al. "Angle-multiplexed metasurfaces: encoding independent wavefronts in a single metasurface under different illumination angles", ARXIV.ORG, Cornell University Library, 201 Olin Library Cornell University Ithaca, NY 14853, 7 November 2017, discloses a method for encoding independent wavefronts in a single metasurface under different illumination angles.

BRIEF DESCRIPTION OF THE DRAWINGS

FIG. 1A illustrates a representative example of a waveguide combiner architecture, in accordance with some embodiments.

FIG. 1B illustrates an example single waveguide architecture carrying three colors, (red, green, and blue) in accordance with some embodiments.

FIGS. 2A-2B illustrate an example metasurface input coupler element, in accordance with some embodiments.

FIG. 3A illustrates a first example waveguide coupler, in accordance with some embodiments.

FIG. 3B illustrates an example graph relating transmission in first order to the incident angle for the first example waveguide coupler of FIG. 3A, in accordance with some embodiments.

FIG. 3C illustrates a second example waveguide coupler, in accordance with some embodiments.

FIG. 3D illustrates an example graph relating transmission in first order to the incident angle for the second example waveguide coupler of FIG. 3C, in accordance with some embodiments.

FIG. 4A illustrates an example metagrating design, in accordance with some embodiments.

FIG. 4B illustrates angle dependent coupling efficiency for the metagrating design of FIG. 4A, in accordance with some embodiments.

FIG. 5A illustrates the relationship between the incident angle and the diffracted angle, in accordance with some embodiments.

FIG. 5B illustrates the incident angle as a function of normalized grating spatial frequency, in accordance with some embodiments.

FIG. 6A illustrates an example grid of parameters, in accordance with some embodiments.

FIG. 6B illustrates a binary description of a device shape, in accordance with some embodiments.

FIG. 6C illustrates an example flowchart of a process of topology optimization, in accordance with some embodiments.

FIG. 7A illustrates an example surface configuration, in accordance with some embodiments.

FIG. 7B illustrates example scattering efficiency for the surface of FIG. 7A, in accordance with some embodiments.

FIG. 7C illustrates an example tiling of the design in FIG. 7A, in accordance with some embodiments.

FIG. 7D illustrates example scattering efficiency in the dimensions, in accordance with some embodiments.

FIG. 8 is a graph illustrating example device transmittance performance as a function of incidence angle, in accordance with some embodiments.

FIG. 9 illustrates an e-beam and atomic layer deposition process for nanofabrication of titania nanostructures, in accordance with some embodiments.

FIG. 10 illustrates an example procedure 1000 for nanoimprint lithography, in accordance with some embodiments.

FIG. 11A illustrates a topological view of the structure, in accordance with some embodiments.

FIG. 11B illustrates example scanning electron microscope image of fabricated $TiO_2$ inverse design grating, in accordance with some embodiments.

FIG. 11C illustrates example measured first-order transmittance of the grating device, in accordance with some embodiments.

FIG. 11D illustrates example simulated transmittance of the grating device, in accordance with some embodiments.

FIGS. 12A-12B illustrate example glass configurations in which some embodiments may be implemented, in accordance with some embodiments.

FIG. 13 is a flowchart of an example process associated with generating and transmitting a layout file for a metasurface waveguide coupler for a display unit, in accordance with some embodiments.

FIG. 14 is a block diagram of a computing machine, in accordance with some embodiments.

FIG. 15 illustrates example grating equations corresponding to an example maximal field of view, in accordance with some embodiments.

FIG. 16A illustrates an example inverse design grating structure, in accordance with some embodiments.

FIG. 16B illustrates an example coupling efficiency using the grating structure of FIG. 16A, in accordance with some embodiments.

DETAILED DESCRIPTION

The following description and the drawings sufficiently illustrate specific embodiments to enable those skilled in the art to practice them. Other embodiments may incorporate structural, logical, electrical, process, and other changes. Portions and features of some embodiments may be included in, or sub stituted for, those of other embodiments. Embodiments set forth in the claims encompass all available equivalents of those claims.

Augmented reality (AR), sometimes known as mixed reality (MR or XR), is a concept that has been steadily gaining prominence. While it has its roots in the defense industry, in the form of various head-mounted displays for flight simulators and related training programs, AR may lead to the next evolution of the traditional display technology, which has gone from cathode ray tube television sets to liquid crystal display (LCD) computer monitors/laptop screens, to organic light emitting diode (OLED) tablets and smartphones. The AR market is projected to grow.

Unlike some use cases of virtual reality (VR), AR may be demanding in terms of the optical technologies involved, since light from both the ambient environment as well as from a micro-display may be conveyed accurately to the viewer with reasonable efficiency. This may leverage the presence of a light combiner, which typically takes the form of either a freeform optic such as a beamsplitter/ combiner or waveguide coupler. The former approach might, in some cases, place high demands on optics involved, which might simultaneously magnify and increase the optical path length from the display to the eye, correct for optical aberrations, and allow light from the real world to pass through without distortion or interference. This generally requires sophisticated optics such as freeform prisms, which might be bulky and have a large spatial footprint. On the other hand, waveguide architectures are particularly attractive because of their inherently compact form factor, and their ability to provide eyebox expansion without the need for additional, bulky optics. A pair of grating in/out-couplers couples the light from the display into/out of a waveguide. The optical path length may be increased via total internal reflection (TIR), and any distortion introduced by the input grating may be reversed by the output grating coupler. The latter may be usually identical to the former except for a gradient in efficiency, which allows for eyebox expansion. Thus, waveguide architectures have emerged as the incumbent.

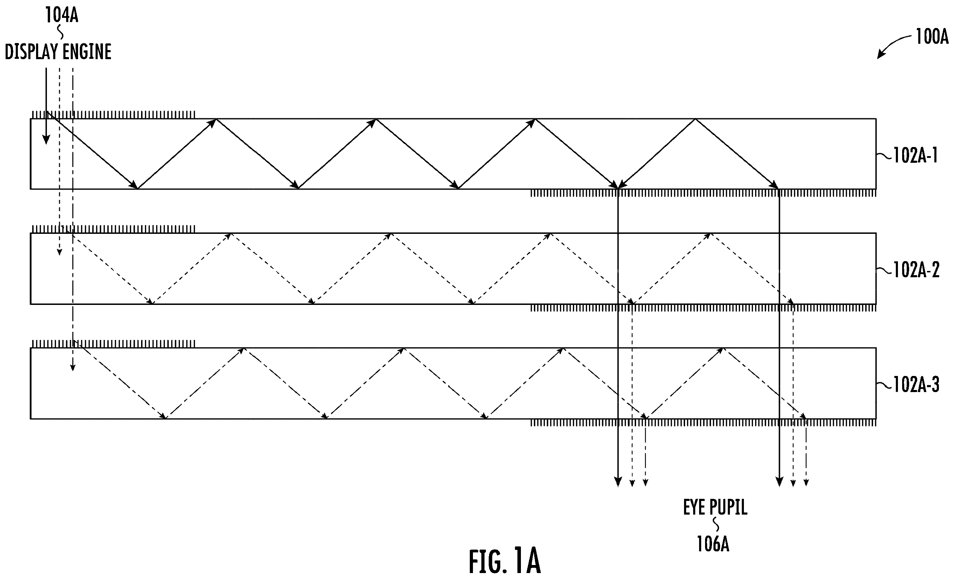

A representative example of a waveguide combiner architecture 100A is shown in FIG. 1A. The overall AR device includes three separate waveguides, each with a pair of incoupling/ outcoupling gratings 102A-1, 102A-2, 102A-3. As shown, the grating 102A-1 is for blue light. The grating 102A-2 is for green light. The grating 102A-3 is for red light. Each primary color - blue, green, and red - is associated with a different wavelength of light. This is done to couple in light over the maximum range of incident angles allowed by the waveguide, thereby increasing the field of view (FOV) for a given substrate index and grating periodicity. As shown, the grating receive light from a display engine 104A (or other visual data) and refract the light from the display engine 104A onto the eye pupil 106A. In FIG. 1A, the gratings shown are slanted gratings but any periodic diffractive optical element can be used. The judicious design of these optical elements are useful in realizing high efficiency, a large eyebox, and large FOV simultaneously.

FIG. 1A illustrates an example red-green-blue (RGB) three waveguide architecture 100A, in accordance with some embodiments. As shown in FIG. 1A, a display engine 104A generates red, green, and blue light (with each color being associated with a different wavelength). The blue light is processed via waveguide 102A-1. The green light is processed via waveguide 102A-2. The red light is processed via waveguide 102A-3. The output of the waveguides 102A-1, 102A-2, and 102A-3 is provided to an eye pupil 106A.

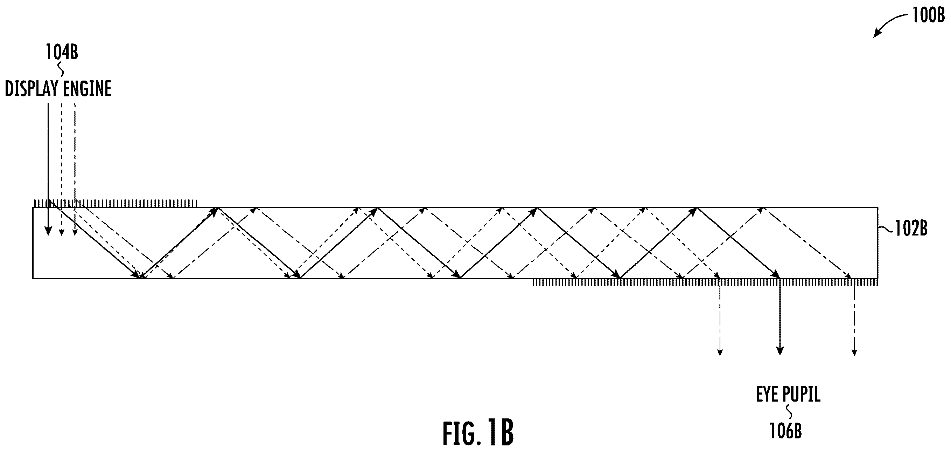

FIG. 1B illustrates an example single waveguide architecture 100B carrying three colors, (red, green, and blue) in accordance with some embodiments. As shown, a display engine 104B generates red, green, and blue light. All of the light (red, green, and blue) is processed via a single waveguide 102B to generate output that is provided to an eye pupil 102B. Advantageously, the single waveguide architecture 100B requires fewer waveguides than the three waveguide architecture 100A.

One limitation of existing grating couplers for waveguide AR architectures is the aforementioned field of view (FOV). This can include, according to some examples, the range of incidence angles of lights that can be coupled into a planar waveguide. This can correspond to the range of angles over which a viewer can see the AR display. In traditional gratings, the FOV is determined by the geometrical parameters of the grating structure (e.g., periodicity, index contrast, slant angle) in accordance with Bragg's Law. However, this FOV may be about 30-40 degrees, compared to the FOV of the human eye which is almost 180 degrees. Additionally, the coupling efficiency as a function of incident angle is also a concern. Ideally, grating couplers may possess an efficiency that is uniform across the FOV, which best approximates the natural viewing condition. However, in practice in addition to having a limited FOV, the efficiency of typical gratings falls off sharply with increasing FOV and can lead to imaging artifacts and an unpleasant viewing experience. As a result of this sharp fall-off, the effective FOV of the system might be significantly reduced. The judicious design of these periodic elements may be useful to realizing high efficiency, a large eyebox, and large FOV simultaneously.

Some embodiments propose one way to add value to an existing product by introducing a unique design of subwavelength gratings with freeform (topology-optimized) shapes. These have a significantly larger FOV than most alternative competing technologies, are inherently more versatile as they can be designed to accommodate multiple different specifications and performance metrics, and more importantly possess a nearly uniform efficiency over the FOV.

Some embodiments use topology inverse design to design a meta-grating in coupler to replace existing surface relief grating. Some embodiments, using inverse design, can specifically target the broad field of view as the design objective, effectively equalizing the scattering efficiency at different incident angle, and achieving a balanced efficiency over a wide field of view. In some embodiments, using topology optimization, the device is not limited to simple lateral geometries, and thus has a significantly larger design space compared with traditional grating design, and thus is able to find higher performance. In some embodiments, the grating designs use a single thin layer of material with binary surface heights (no slants or grayscale feature height variation) and are therefore relatively easier to fabricate and manufacture compared to some existing surface relief grating designs. Some embodiments incorporate fabrication tolerance during the design in order to make sure that the final design does not have very small features and is thus manufacturable.

Some embodiments relate to an inverse-designed, diffraction efficiency optimized metasurface grating input coupler operating in the visible wavelengths. According to some embodiments, the design methodology for the grating elements may be applied towards high performance AR/VR waveguide couplers. The grating unit cells (tiled horizontally and vertically) may include nanoscale, dielectric structures with free-form lateral geometries and a single height level fabricated on a glass substrate. The lateral nanostructure geometries are topologically optimized to achieve the highest (or higher than a threshold) diffraction efficiency uniformity and FOV for a selected wavelength. Some embodiments relate to fabrication techniques for realizing these structures. Some embodiments provide optimized diffraction efficiency uniformity and FOV of the waveguide incoupler while maintaining ease of fabrication.

The output grating coupler of the AR system may leverage a linear gradient in transmission efficiency to ensure the highest eyebox expansion. The gradient may be achieved by, for example, a linear variation in the grating height (depth). In some embodiments, the same effect may also be achieved by selecting different target transmittance values for the optimized metagrating unit cells, then stitching together the unit cells with varying transmittance values.

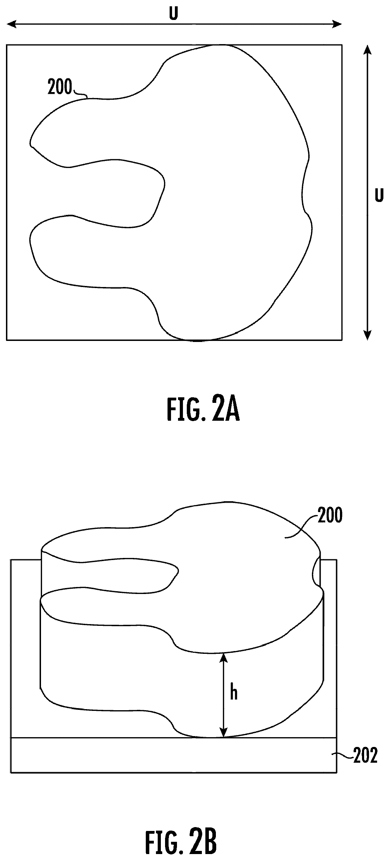

In some embodiments, the substrate is chosen to be n=1.8 index glass, which may be used AR applications, although a higher refractive index substrate may also be chosen. It should be noted that the FOV of the grating coupler improves with increasing substrate refractive index. A drawing of an example metasurface input coupler element is shown in FIGS. 2A-2B, where the lateral shape has been optimized for deflection efficiency. The grating unit cell dimension (u in FIGS. 2A-2B) is chosen to be $\lambda/1.1$, where $\lambda$ is the design wavelength. In some examples, the height dimension h is may be optimized around 200-300 nm. In some examples, the height dimension h may be between 100 and 1000 nm. Choosing a dielectric grating material with a high refractive index relative to air may be useful for inverse design because it allows for the existence of optical resonant modes within the thin dielectric layer that can constructively interfere in the intended diffraction direction. In some cases, a lower limit for the grating material refractive index may be n=2.0.

FIGS. 2A-2B illustrate an example metasurface input coupler element 200 having a period u and a height h. FIG 2A is a top view of the topology optimized shape. FIG. 2B is a three-dimensional (3D) schematic illustrating the metasurface input coupler element 200 and a glass substrate 202.

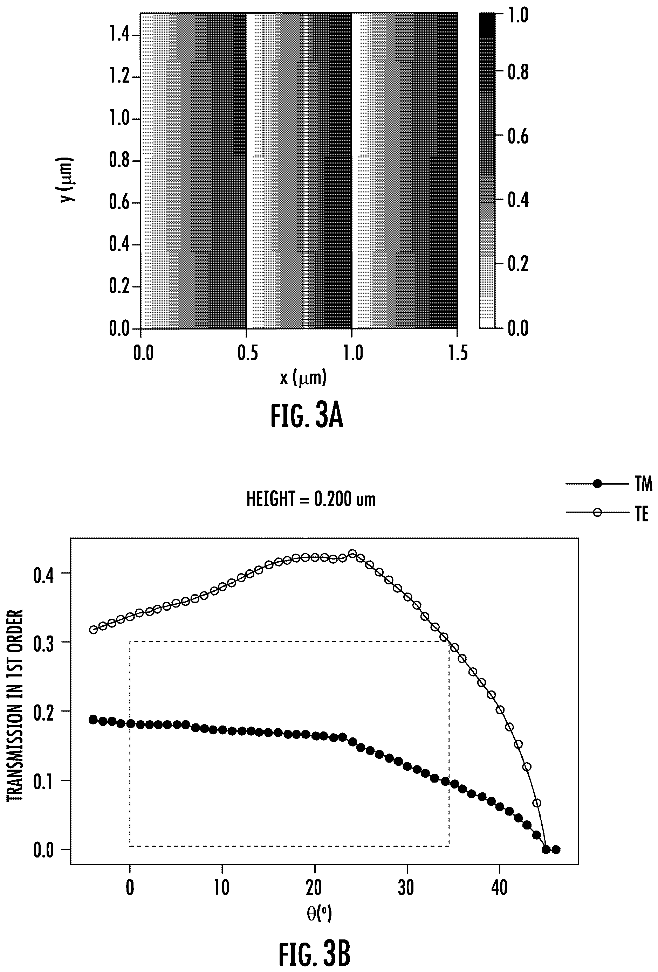

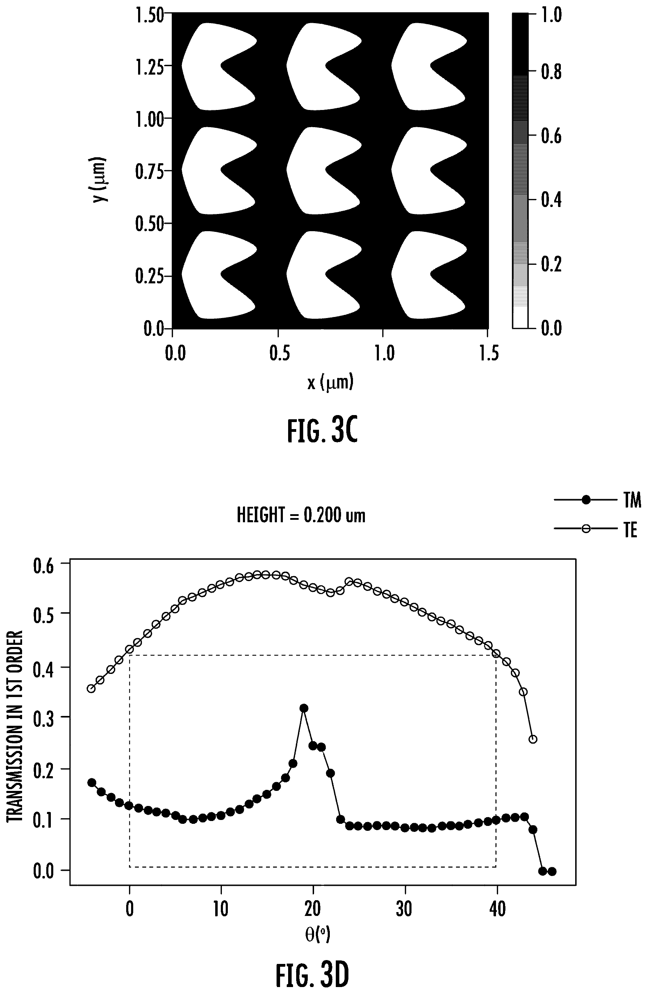

FIG. 3A illustrates a first example waveguide coupler. FIG. 3B illustrates an example graph relating transmission in first order to the incident angle for the first example waveguide coupler of FIG. 3A. FIG. 3C illustrates a second example waveguide coupler. FIG. 3D illustrates an example graph relating transmission in first order to the incident angle for the second example waveguide coupler of FIG. 3C.

$TiO_2$ is one choice for dielectric metasurfaces operating in the visible wavelengths due to its relatively high refractive index (~2.4 in the visible spectrum) and low material loss. FIGS. 3A-3D compare an unoptimized $TiO_2$ grating structure (linear blazed grating) to an optimized $TiO_2$ inverse design. The linear blazed grating (FIG. 3A) shows a relatively sharp maximum in transmission that decays rapidly away from 20 degrees (FIG. 3B). As a result of the rapid decay, the transmission falls below 30% for incident angles exceeding 34 degrees (FIG. 3B). On the other hand, the inverse-designed TiO2 grating shown in FIG. 3C maintains a 40% transmission level up to 41 degrees angle of incidence (see FIG. 3D). The usable angular bandwidth of an incoupler system can be taken as the full width at half maximum (FWHM) of the incident-angle dependent transmittance. The improvement in diffraction efficiency uniformity afforded by the inverse design structure therefore results in a higher effective FOV.

FIGS. 3A-3D illustrate a comparison of an unoptimized gradient index grating versus a topology optimized metasurface grating. In both cases, the highest index is TiO$_2$ ($n_{meta}$ = 2.39). $\lambda$ = 0.55 $\mu m$, $h_{meta}$ = 0.2 $\mu m$, $n_{substrate}$ = 1.80. In FIGS. 3A and 3C, the image of the grating lateral structure is shown. Black corresponds to TiO2, white corresponds to air, and gray corresponds to an intermediate index. FIGS. 3B and 3D show the scattering efficiency in the first order in transmission for both TE and TM polarized light, with FIG. 3B corresponding to FIG. 3A, and FIG. 3D corresponding to FIG. 3C.

To promote manufacturing ease, some embodiments leverage designs in which a high index polymer is used to form the grating structure in place of the pure TiO$_2$. Typically the effective refractive index of the polymer is tuned by loading the polymer with TiO$_2$ nanoparticles. The final refractive index of the loaded resin depends on the density of the nanoparticles and can be calculated using the Maxwell-Garnet formula. Nanoparticle loaded resins may have refractive indices reaching up to 1.9-2.0.

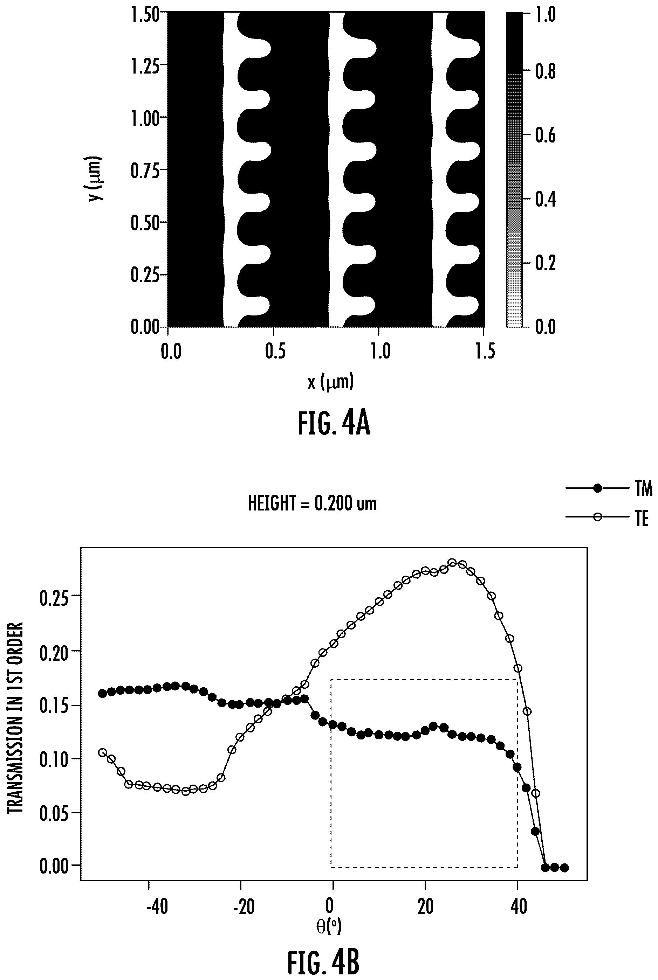

FIG. 4A illustrates an example metagrating design. FIG. 4B illustrates angle dependent coupling efficiency for the metagrating design of FIG. 4A, with n_substrate=1.80, n_meta=2.0, h_meta=0.2 um. Pure TiO$_2$ structures can be fabricated using nanoimprint lithography techniques, where a master pattern is used to stamp the inverse design pattern in resist, followed by an etching step to reveal the TiO$_2$ structures. In this case, the final grating design can be directly patterned using nanoimprint masters into the high index polymer without an etching step. The design assuming n=2.0 is shown in FIG. 4A with the performance shown in FIG. 4B.

It is also possible to realize high efficiency devices using other high index materials such as crystalline silicon, although the optical absorption of this material for visible wavelengths may be higher than TiO$_2$. The optical loss in amorphous silicon might be too high to consider it as a design material. However, it is typically difficult to create high quality thin layers of crystalline silicon on glass since it might, in some cases, leverage a bonding/transfer step.

The grating structure satisfies the grating equation, Equation 1.

$$n_1 * \sin\theta + \frac{m\lambda}{d} = n_2 * \sin\alpha$$

### Equation 1

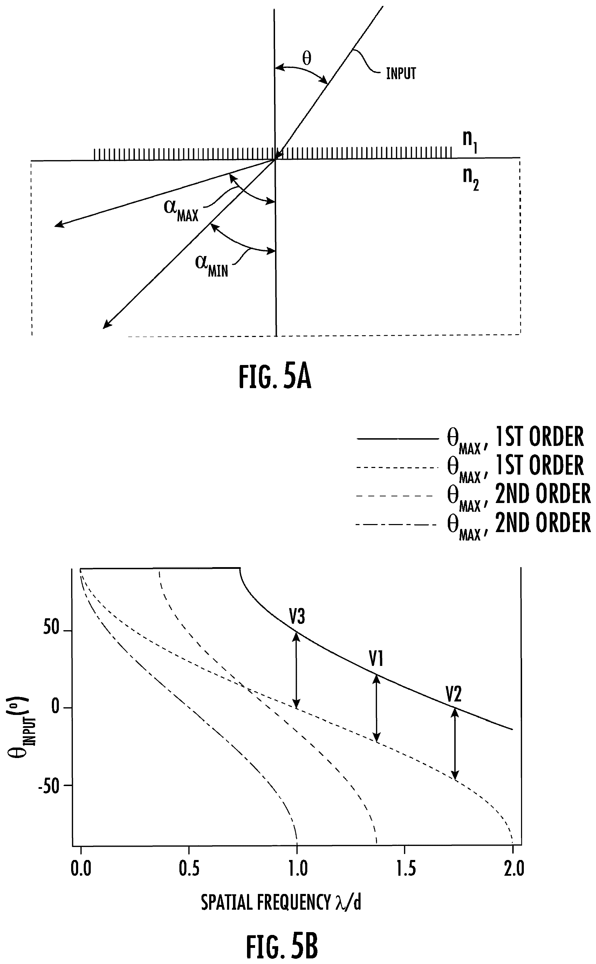

In Equation 1, $n_1$ and $n_2$ are the refractive index of the environment (air, $n_1$=1) and the substrate (high index glass, $n_2$=1.8), $\theta$ is the incident angle, $\alpha$ is the output angle, m is the grating order, $\lambda$ is the wavelength, and d is the grating period. FIG. 5A illustrates an example geometry.

In order for the in-coupler grating to work properly, according to some examples: (1) for the first order diffraction (m=1), $\alpha$ is in the range [$\alpha_{min}$, $\alpha_{max}$], where $\alpha_{min}$ is determined by the internal total reflection and $\alpha_{max}$ is determined by largest grazing angle allowed, for example 75°, and (2) for any other diffraction order second, third, negative first, etc., the diffraction equation may not be satisfied (thus being guided by the waveguide).

The result is summarized in FIG. 5B, where the band 502B corresponds to the field of view supported by a particular grating period d, or its normalized spatial frequency $\lambda$/d. If a symmetric field of view is targeted, the optimal design may have $\lambda$/d$\approx$1.35, labeled in FIG. 5B as V1. On the other hand, if a non-symmetric field of view is targeted, only covering half of the actual field of view, and using a separate grating to cover the other half of the field of view, then the optimal design might have $\lambda$/d=1.0 (V3) or $\lambda$/d=1.75 (V2 in FIG. 5B). However, in general having a large d may facilitate fabrication and have higher efficiency. Thus, in some embodiments, $\lambda$/d=1.1.

FIG. 5A shows the relationship between the incident angle $\theta$ and the diffracted angle $\alpha$. The target for the in-coupler grating is that the diffraction angle lies between $\alpha_{min}$ (determined by the internal total reflection) and $\alpha_{max}$ (determined by largest grazing angle, for example, 75°). FIG. 5B shows the incident angle $\theta_{input}$ as a function of normalized grating spatial frequency $\lambda$/d where $\lambda$ is the wavelength and d is the grating period.

The figure of merit function to maximize is shown in Equation 2.

$$\max_{\{shape\}} FOM = \min_{\substack{\theta \in \{\theta_1, \theta_2, \theta_3, \theta_4\} \\ \eta \in \{\eta_a, \eta_b, \eta_c\}}} power(\theta, \eta)$$

### Equation 2

In Equation 2, $\{\theta_1, \theta_2, \theta_3, \theta_4\}$ is a set of angles of the incident light. $\{\eta_a, \eta_b, \eta_c\}$ is a set of parameters describing the fabrication constraint of the manufacturing process. Depending on the exact fabrication process (e.g., e-beam lithography, deep UV lithography, or nanoimprint lithography, etc.), this fabrication constraint might, in some cases, be different.

What Equation 2 represents is that among all the fabrication condition, and all the possible incident angles, the worst case performance is optimized. Alternatively, Equation 3 may be used

$$\max_{\{shape\}} FOM = \sum_{\substack{\theta \in \{\theta_1, \theta_2, \theta_3, \theta_4\} \\ \eta \in \{\eta_a, \eta_b, \eta_c\}}} A(\theta, \eta) \cdot power(\theta, \eta)$$

### Equation 3

In Equation 3, there is an additional parameter $A(\theta, \eta)$ that describes the relative importance (or weight) of different condition. For example, if $A(\theta, \eta)=1$, it means that all conditions are weighted equally. Depending on the exact target response, different figure of merit functions may be used.

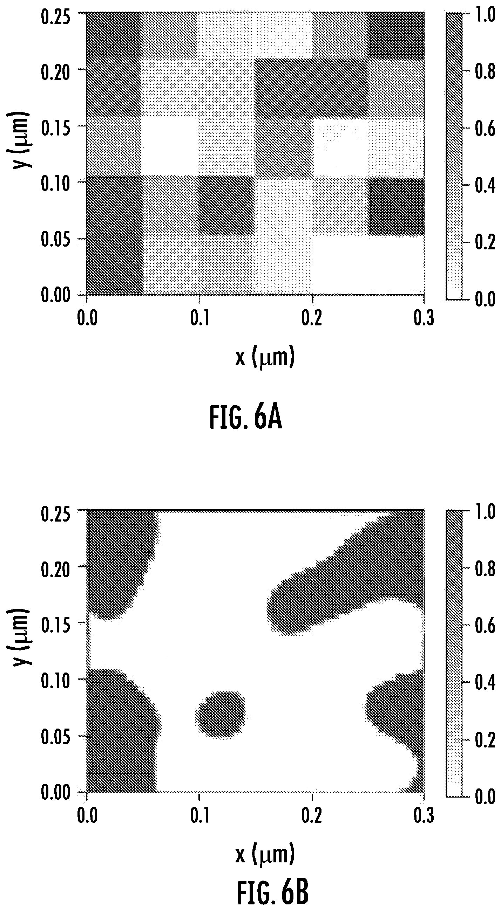

Some embodiments use two different parameterization to describe the shape. An example is shown in FIGS. 6A-6B. FIG. 6A shows a 5x6 grid, of 30 different parameters. Each grid is 50 nm x 50 nm. Thus, it represents a structure that can at most change on the length scale of 50 nm. This will be the minimal feature size. FIG. 6B shows a finer binary description of the actual device shape that the 5x6 gray scale image of FIG. 6A represents. This binary representation has much smaller grid size of 5 nm x 5 nm. Thus, it can more accurately reflect the device shape. FIG. 6B (or its contour) is the data that may be converted to a layout file, and sent to the fabrication machine (e.g., e-beam lithography tool) to fabricate the pattern on the substrate for the surface coupled to the display unit.

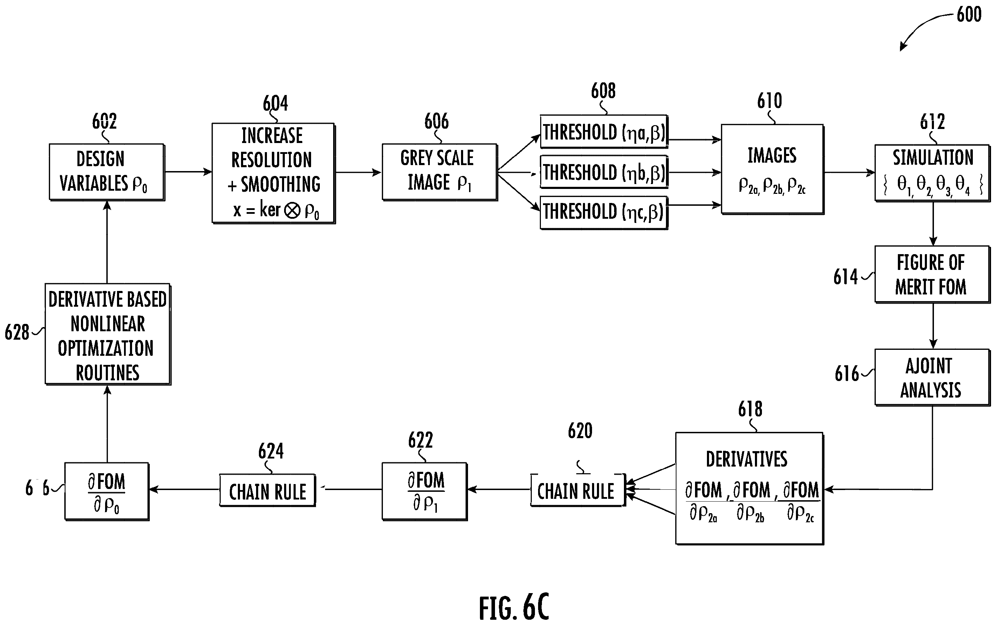

FIG. 6C illustrates an example flowchart of a process 600 of topology optimization, which may be implemented at a computer (e.g., computing machine 1400). In the process 600, the fine description and the coarse description. The coarse description is in design variables $\rho_0$; the fine description is in $\rho_{2,a,b,c}$; $\rho_1$ is some intermediate representation that is gray scale and has a fine resolution.

At block 602, design variables $\rho_0$ are computed. At block 604, resolution and smoothing are increased. At block 606, a gray scale image $\rho_1$ is generated. At block 608 thresholds are computed. At block 610, images $\rho_{2,a,b,c}$ are generated. At block 612, a simulation is run. At block 614, a figure of merit (FOM) is accessed. At block 616, adjoint analysis is run. At block 618, derivatives $\delta FOM / \delta \rho_{2a}$, $\delta FOM / \delta \rho_{2b}$, and $\delta FOM / \delta \rho_{2c}$. At block 620, the chain rule is applied. At block 622, $\delta FOM / \delta \rho_1$ is computed. At block 624, the chain rule is applied. At block 626, $\delta FOM / \delta \rho_0$ is computed. At block 628, derivative based nonlinear optimization routines are executed. After block 628, the process 600 may end (e.g., if a predefined stopping condition is met) or may recursively return to block 602. Some embodiments of the process 600 leverage the use of coarse and fine grid parameters.

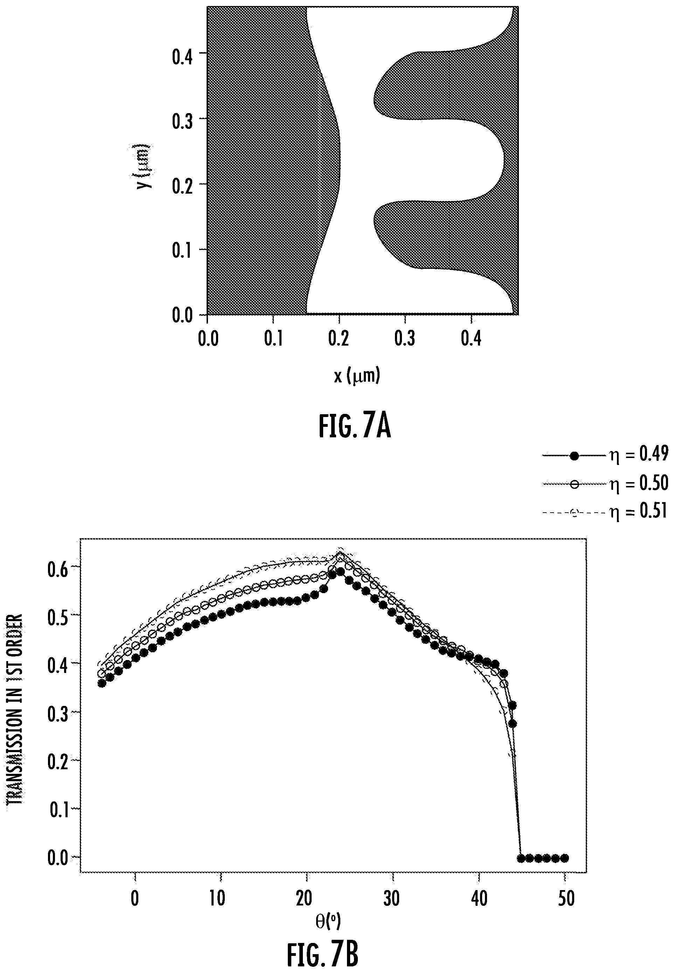

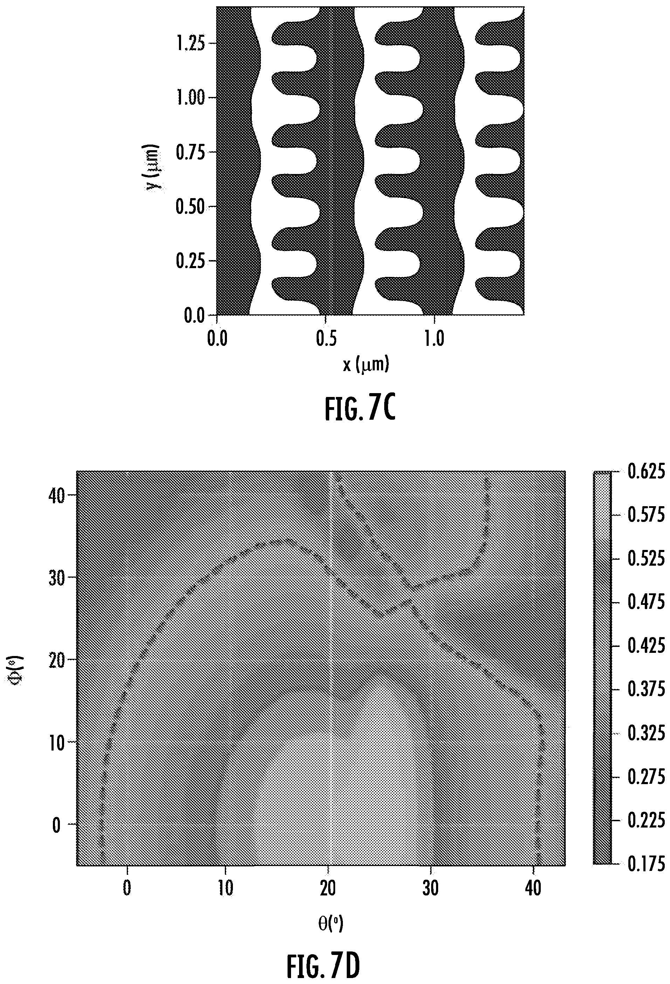

An example of adjoint topology optimized grating design is shown in FIGS. 7A-7D. In some embodiments, the surface shown in FIGS. 7A and 7C is designed to target green light ($\lambda$=520 nm). The substrate index $n_2$=1.80. The grating is made out of 200 nm thick $TiO_2$ (n=2.414 @520 nm). The meta-grating unit cell size is 472 nm$\times$ 472 nm, corresponding to $\lambda$/1.1. Notice that the minimal feature size here is >60 nm, with smoothly curved edges, that are compatible with existing nano-fabrication.

FIGS. 7A-7D relate to metagrating device designed through topology optimization. FIG. 7A illustrates an example surface configuration. Some embodiments overlay 3 images (red with $\eta$=0.49, green with $\eta$=0.50, and blue with $\eta$=0.51) corresponding to three scenerios of under / as designed / over-etched structure. FIG. 7B illustrates example scattering efficiency for the surface of FIG. 7A over the range from 0 to 50 degrees. One can see that over for all three cases of $\eta$, the device efficiency over 0 to 40 degree range is consistently above 40%. FIG. 7C illustrates an example 3x3 tiling of the design in FIG. 7A. FIG. 7D illustrates example scattering efficiency in the two dimensions, showing the vertical field of view of close to 40 degrees, while maintain (half) horizontal field of view of (40 degrees).

Commercialized SRG-based waveguide combiners may use slanted grating designs to achieve high FOV and diffraction efficiency compared to binary symmetric grating designs. Slanted grating designs may show a strongly peaked in angle-dependent transmission spectrum. As a result, the angular spectrum shows a significantly lower diffraction efficiency uniformity as a function of incidence angle compared to the inverse-design structures, which is undesirable. Increasing the diffraction uniformity of the slanted grating designs is possible using techniques such as slant modifications. However, these techniques might, in some cases, add additional fabrication complexity.

Some schemes for designs focus on enabling high diffraction uniformity using novel grating geometries with high refractive indices. These may leverage an optimized U-shaped nanostructure grating based on near-field sculpting to achieve a high diffraction uniformity compared to standard slanted grating designs. The U-Shape structures may be designed with titania to increase the grating coupling efficiency. However, nanofabrication of the U-shaped structure might be difficult due to the nanoscale alignment required between the bottom and sides of the U shape. Further, the flat bottom part of the U might, in some cases, contribute an unwanted parasitic signal that might, in some cases, contribute to the formation of ghost images.

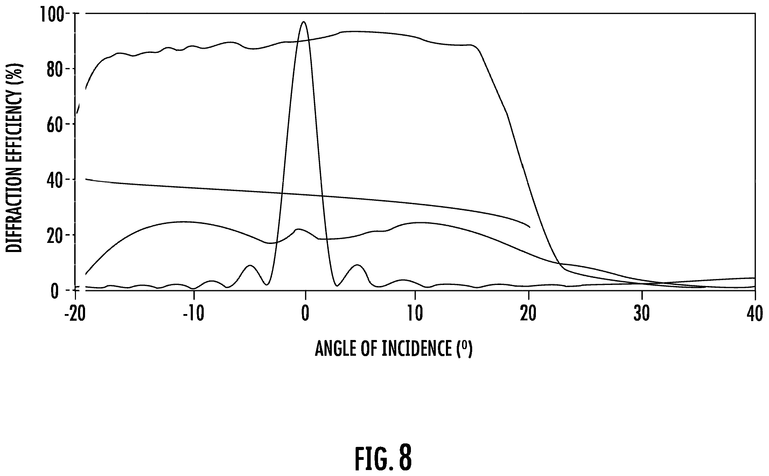

Surface relief grating (SRG) devices might be more favorable for high volume manufacturing compared to other designs such as holographic volume gratings, which might be sandwiched between two layers of glass. If ease of manufacturing is not the main concern, designs such as many-layer liquid crystal-based Bragg polarization gratings (see FIG. 8) have shown very high diffraction efficiency uniformity compared to other designs. However, the liquid crystal-based devices might be more expensive to fabricate.

FIG. 8 is a graph illustrating example device transmittance performance as a function of incidence angle.

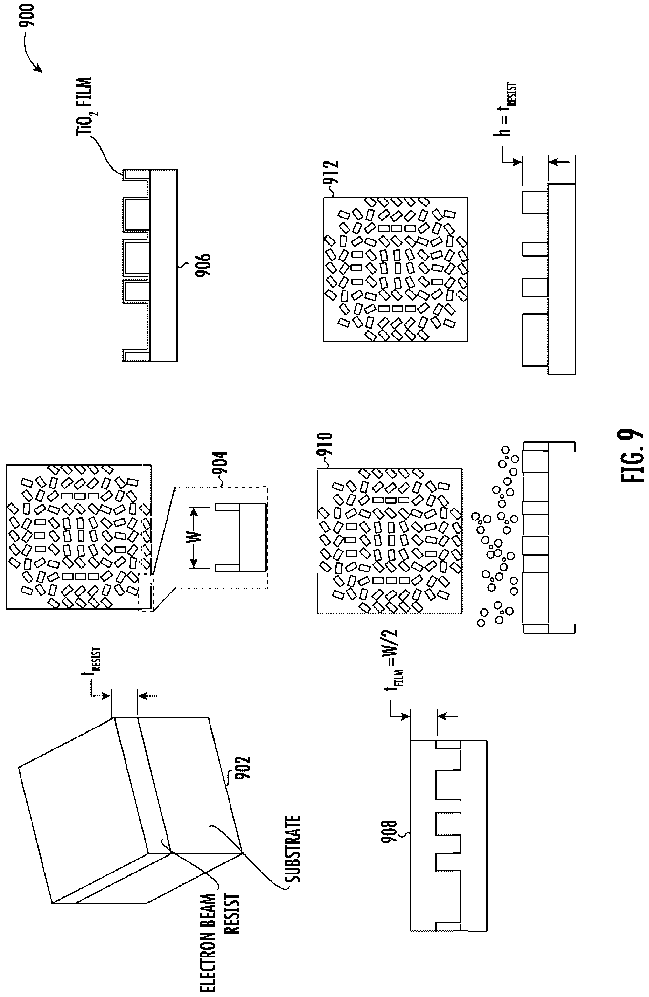

FIG. 9 illustrates an e-beam and atomic layer deposition (ALD) process 900 for nanofabrication of titania nanostructures. At block 902, resist is first spin-coated on glass subtrate, followed by e-beam pattern exposure at block 904. Blocks 906 and 908 include $TiO_2$ ALD deposition. Block 910 includes back-etching using reactive ion etching (RIE). Block 912 includes removal of the remaining resist.

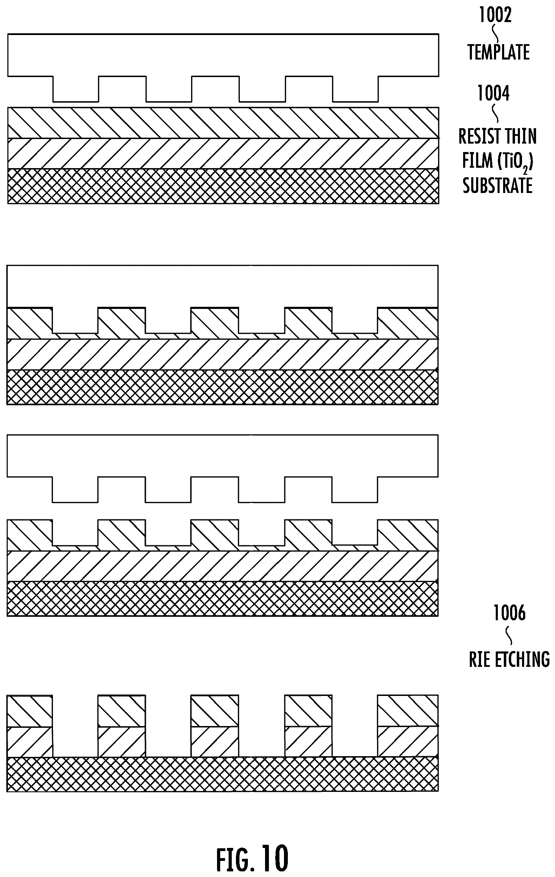

Because the inverse design grating structures can be realized from a single height level of dielectric material, it is possible to fabricate the device using high volume techniques such as nanoimprint (or roll-to-roll nanoimprint) lithography (NIL). A schematic of the NIL process is shown in FIG. 10.

FIG. 10 illustrates an example procedure 1000 for nanoimprint lithography (NIL). A template 1002 is fabricated using e-beam lithography with the negative of the intended pattern. A thin film 1004 of $TiO_2$ is deposited onto a glass substrate, followed by a thin layer of polymer resist. The template is pressed into the resist, forming the inverse of the intended pattern. The stack is then etched using RIE etching 1006, (e.g., using inductively coupled plasma (ICP) RIE) with the polymer layer providing a hard mask.

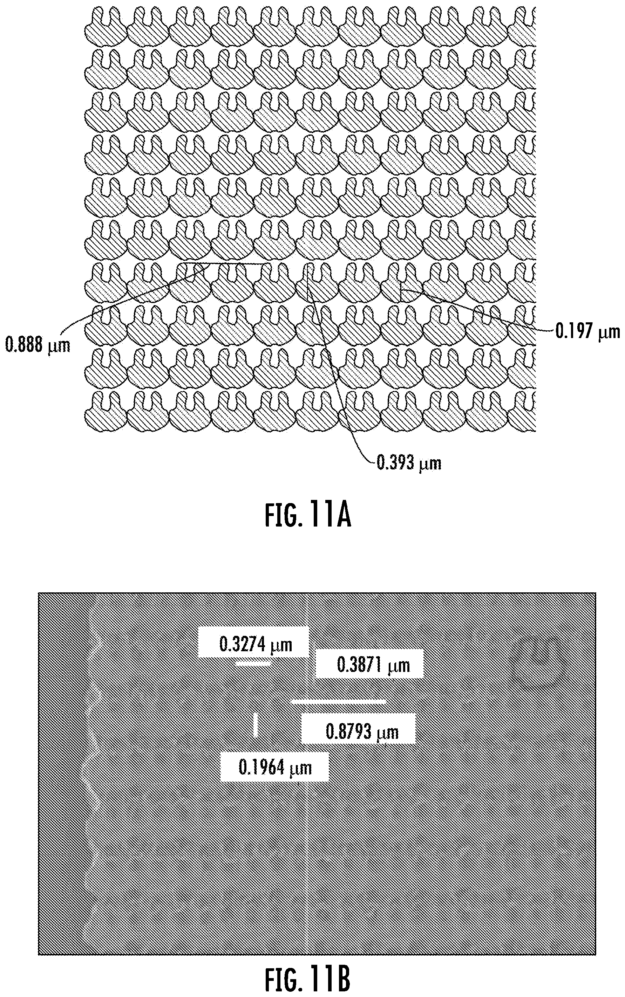

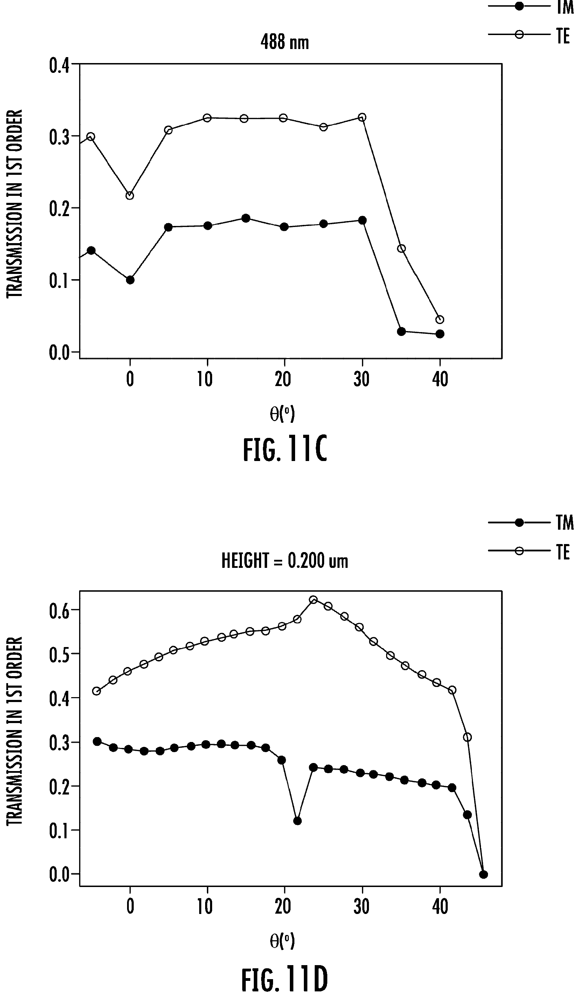

Using the e-beam lithography and ALD deposition process from FIG. 9, some embodiments may fabricate an inverse-design grating coupler as a proof-of-concept. The grating coupler may be designed for 488 nm (unit cell of 444 nm). A topological view of the structure is shown in FIG. 11A. To allow the beam to transmit through the sample without total internal reflection (TIR), the substrate (n = 1.8) may be bonded, for example and among other things, to an N-SF11 prism (n = 1.82 at $\lambda$ = 455 nm) using n = 1.7 adhesive. In one example, the adhesive may be product number NOA170 (Norland Products). The transmittance of the first order beam is shown in Fig. 11C, correcting for Fresnel losses between the interfaces. The polarization dependence of the grating coupler and angular dependence of the transmittance is in good agreement with the theoretical spectrum. The overall efficiency of the device may, in some cases, be improved with further process refining, for example by removing some of the residual resist in between the grating features seen in Fig. 11B.

FIG. 11A illustrates a topological view of the structure, in accordance with some embodiments. For example, FIG. 11A may include a pattern target .gds file for inverse design grating. FIG. 11B illustrates example scanning electron microscope (SEM) image of fabricated $TiO_2$ inverse design grating, in accordance with some embodiments. FIG. 11C illustrates example measured first-order transmittance of the grating device for TE (transverse electric) and TM (transverse magnetic) polarizations, in accordance with some embodiments. Incident angles within the TM region produce first order beams that have deflection angles higher than the TIR angle between the substrate and adhesive. FIG. 11D illustrates example simulated transmittance of the grating device for TE and TM polarizations using Rigorous Coupled-Wave Analysis (RCWA), in accordance with some embodiments.

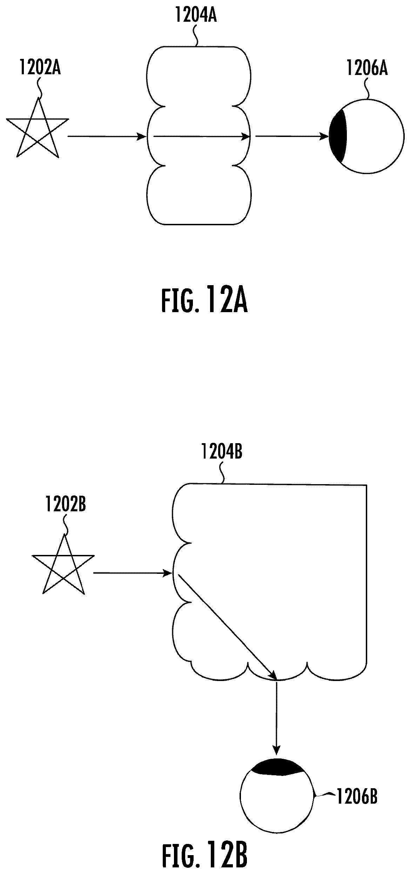

FIGS. 12A-12B illustrate example glass configurations in which some embodiments may be implemented. In FIG. 12A, an object 1202A is viewed through an etched glass 1204A with metasurface waveguide couplers by an eyeball 1206A. The light passes directly through the glass 1204A, such that the eyeball 1206A is on the opposite side of the glass 1204A from the object 1202A. In FIG. 12B, an object 1202B is viewed through an etched glass 1204B with metasurface waveguide couplers by an eyeball 1206B. The light passes directly through the glass 1204A, such that the eyeball 1206B is on an adjacent side of the glass 1204B from the object 1202B. In FIG. 12B, light is refracted (e.g., by the metasurface waveguide couplers) to travel to the adjacent side of the glass 1204B rather than to the opposite side of the glass, as in FIG. 12A.

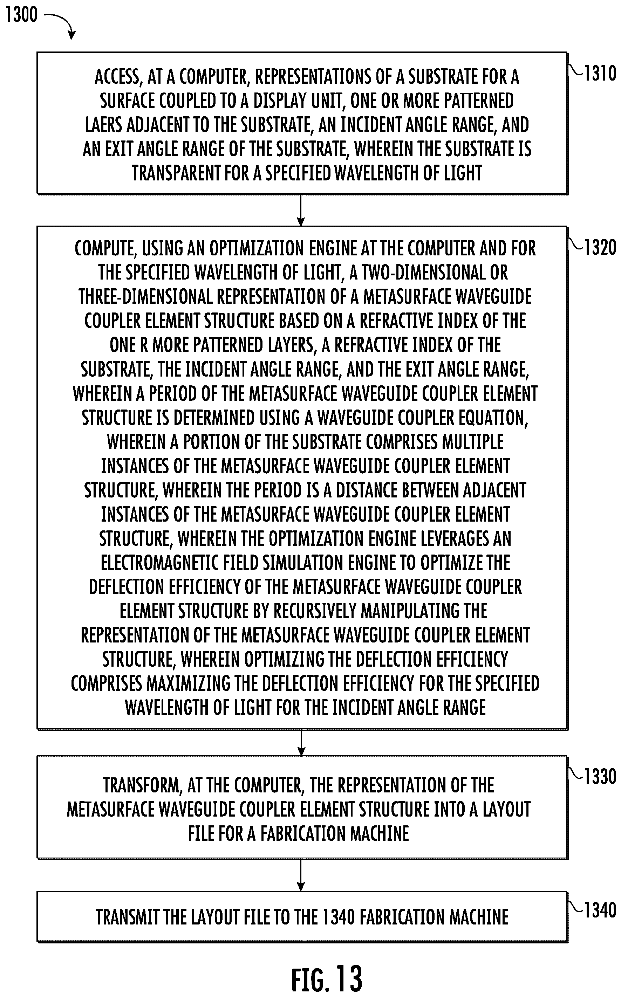

FIG. 13 is a flowchart of an example process 1300 associated with generating and transmitting a layout file for a metasurface waveguide coupler for a display unit. In some implementations, one or more process blocks of FIG. 13 may be performed by a computer (e.g., computing machine 1400). In some implementations, one or more process blocks of FIG. 13 may be performed by another device or a group of devices separate from or including the computer. Additionally, or alternatively, one or more process blocks of FIG. 13 may be performed by one or more components of computing machine 1400. device 1400, such as processor 1402, main memory 1404, static memory 1406, drive unit 1416, signal generation device 1418, and network interface device 1420.

As shown in FIG. 13, process 1300 may include accessing, at a computer, representations of a substrate for a surface coupled to a display unit, one or more patterned layers adjacent to the substrate, an incident angle range, and an exit angle range of the substrate, wherein the substrate is transparent for a specified wavelength of light (block 1310). For example, the computer may access, at a computer, representations of a substrate for a surface coupled to a display unit, one or more patterned layers adjacent to the substrate, an incident angle range, and an exit angle range of the substrate, wherein the sub strate is transparent for a specified wavelength of light, as described above.

As further shown in FIG. 13, process 1300 may include computing, using an optimization engine at the computer and for the specified wavelength of light, a two-dimensional or three-dimensional representation of a metasurface waveguide coupler element structure based on a refractive index of the one or more patterned layers, a refractive index of the substrate, the incident angle range, and the exit angle range, wherein a period of the metasurface waveguide coupler element structure is determined using a waveguide coupler equation, wherein a portion of the substrate comprises multiple instances of the metasurface waveguide coupler element structure, wherein the period is a distance between adjacent instances of the metasurface waveguide coupler element structure, wherein the optimization engine leverages an electromagnetic field simulation engine to optimize the deflection efficiency of the metasurface waveguide coupler element structure by recursively manipulating the representation of the metasurface waveguide coupler element structure, wherein optimizing the deflection efficiency comprises maximizing the deflection efficiency for the specified wavelength of light for the incident angle range (block 1320). For example, the computer may compute, using an optimization engine at the computer and for the specified wavelength of light, a two-dimensional or three-dimensional representation of a metasurface waveguide coupler element structure based on a refractive index of the one or more patterned layers, a refractive index of the substrate, the incident angle range, and the exit angle range, wherein a period of the metasurface waveguide coupler element structure is determined using a waveguide coupler equation, wherein a portion of the substrate comprises multiple instances of the metasurface waveguide coupler element structure, wherein the period is a distance between adjacent instances of the metasurface waveguide coupler element structure, wherein the optimization engine leverages an electromagnetic field simulation engine to optimize the deflection efficiency of the metasurface waveguide coupler element structure by recursively manipulating the representation of the metasurface waveguide coupler element structure, wherein optimizing the deflection efficiency comprises maximizing the deflection efficiency for the specified wavelength of light for the incident angle range, as described above.

As further shown in FIG. 13, process 1300 may include transforming, at the computer, the representation of the metasurface waveguide coupler element structure into a layout file for a fabrication machine (block 1330). For example, the computer may transform, at the computer, the representation of the meta surface waveguide coupler element structure into a layout file for a fabrication machine, as described above.

As further shown in FIG. 13, process 1300 may include transmitting the layout file to the fabrication machine (block 1340). For example, the computer may transmit the layout file to the fabrication machine, as described above.

Process 1300 may include additional implementations, such as any single implementation or any combination of implementations described below and/or in connection with one or more other processes described elsewhere herein.

In a first implementation, the waveguide coupler equation is $n_1 * \sin\theta + \dfrac{m\lambda}{d} = n_2 * \sin\alpha$, wherein: $n_1$ and $n_2$ are the refractive index of an external material (air, $n_1 = 1$) and the substrate (high index glass, $n_2 = 1.8$), $\theta$ is an incident angle, $\alpha$ is an exit angle, m is a metasurface waveguide coupler element order, $\lambda$ is the specified wavelength of light, and d is the period.

In a second implementation, the display unit comprises an augmented reality (AR) or virtual reality (VR) display unit, the method further comprising receiving, at the fabrication machine, the layout file, and fabricating, at the fabrication machine, the surface for coupling to the display unit in response to receiving the layout file.

In a third implementation, process 1300 includes computing, using the optimization engine, multiple metasurface waveguide coupler element structures for multiple wavelengths of light, and transmitting, to the fabrication machine, layout files associated with each of the multiple metasurface waveguide coupler element structures.

In a fourth implementation, the multiple wavelengths of light comprise one or more of a wavelength of red light, a wavelength of green light, and a wavelength of blue light.

In a fifth implementation, the metasurface waveguide coupler element structure is computed based, at least in part, on a fabrication tolerance of the fabrication machine.

In a sixth implementation, process 1300 includes removing, based on the fabrication tolerance, features smaller than a threshold size from the metasurface waveguide coupler element structure.

In a seventh implementation, the surface comprises a thin layer having a thickness less than one micron.

In an eighth implementation, the thickness is between fifty and three-hundred-fifty nanometers.

In a ninth implementation, the surface comprises two height levels with one or more extrusions extending from a first height level to a second height level.

In a tenth implementation, the substrate provides support for a coating structure for a grating metasurface material and a background material.

In an eleventh implementation, the substrate includes metasurfaces on at least one outer part of the substrate.

In a twelfth implementation, the substrate that is transparent for light of the specified wavelength, being transparent comprising having a loss less than a threshold loss value.

In a thirteenth implementation, the metasurface waveguide coupler element structure comprises a grating element structure.

In a fourteenth implementation, process 1300 includes accessing, at the computer, a thickness of the substrate and a radius of a curvature of the substrate, wherein the representation of the metasurface waveguide coupler element structure is computed based on the thickness and the radius.

In a fifteenth implementation, the representation of the metasurface waveguide coupler element structure is grid-based or contour-based.

In a sixteenth implementation, the specified wavelength is between three-hundred-fifty and seven-hundred-fifty nanometers.

Although FIG. 13 shows example blocks of process 1300, in some implementations, process 1300 may include additional blocks, fewer blocks, different blocks, or differently arranged blocks than those depicted in FIG. 13. Additionally, or alternatively, two or more of the blocks of process 1300 may be performed in parallel.

Aspects of the present technology may be implemented as part of a computer system. The computer system may be one physical machine, or may be distributed among multiple physical machines, such as by role or function, or by process thread in the case of a cloud computing distributed model. In various embodiments, aspects of the technology may be configured to run in virtual machines that in turn are executed on one or more physical machines. It will be understood by persons of skill in the art that features of the technology may be realized by a variety of different suitable machine implementations.

The system includes various engines, each of which is constructed, programmed, configured, or otherwise adapted, to carry out a function or set of functions. The term engine as used herein means a tangible device, component, or arrangement of components implemented using hardware, such as by an application specific integrated circuit (ASIC) or field-programmable gate array (FPGA), for example, or as a combination of hardware and software, such as by a processor-based computing platform and a set of program instructions that transform the computing platform into a special-purpose device to implement the particular functionality. An engine may also be implemented as a combination of the two, with certain functions facilitated by hardware alone, and other functions facilitated by a combination of hardware and software.

In an example, the software may reside in executable or non-executable form on a tangible machine-readable storage medium. Software residing in non-executable form may be compiled, translated, or otherwise converted to an executable form prior to, or during runtime. In an example, the software, when executed by the underlying hardware of the engine, causes the hardware to perform the specified operations. Accordingly, an engine is physically constructed, or specifically configured (e.g., hardwired), or temporarily configured (e.g., programmed) to operate in a specified manner or to perform part or all of any operations described herein in connection with that engine.

Considering examples in which engines are temporarily configured, each of the engines may be instantiated at different moments in time. For example, where the engines comprise a general-purpose hardware processor core configured using software, the general-purpose hardware processor core may be configured as respective different engines at different times. Software may accordingly configure a hardware processor core, for example, to constitute a particular engine at one instance of time and to constitute a different engine at a different instance of time.

In certain implementations, at least a portion, and in some cases, all, of an engine may be executed on the processor(s) of one or more computers that execute an operating system, system programs, and application programs, while also implementing the engine using multitasking, multithreading, distributed (e.g., cluster, peer-peer, cloud, etc.) processing where appropriate, or other such techniques. Accordingly, each engine may be realized in a variety of suitable configurations, and should generally not be limited to any particular implementation exemplified herein, unless such limitations are expressly called out.

In addition, an engine may itself be composed of more than one sub-engines, each of which may be regarded as an engine in its own right. Moreover, in the embodiments described herein, each of the various engines corresponds to a defined functionality; however, it should be understood that in other contemplated embodiments, each functionality may be distributed to more than one engine. Likewise, in other contemplated embodiments, multiple defined functionalities may be implemented by a single engine that performs those multiple functions, possibly alongside other functions, or distributed differently among a set of engines than specifically illustrated in the examples herein.

As used herein, the term "model" encompasses its plain and ordinary meaning A model may include, among other things, one or more engines which receive an input and compute an output based on the input. The output may be a classification. For example, an image file may be classified as depicting a cat or not depicting a cat. Alternatively, the image file may be assigned a numeric score indicating a likelihood whether the image file depicts the cat, and image files with a score exceeding a threshold (e.g., 0.9 or 0.95) may be determined to depict the cat.

This document may reference a specific number of things (e.g., "six mobile devices"). Unless explicitly set forth otherwise, the numbers provided are examples only and may be replaced with any positive integer, integer or real number, as would make sense for a given situation. For example, "six mobile devices" may, in alternative embodiments, include any positive integer number of mobile devices. Unless otherwise mentioned, an object referred to in singular form (e.g., "a computer" or "the computer") may include one or multiple objects (e.g., "the computer" may refer to one or multiple computers).

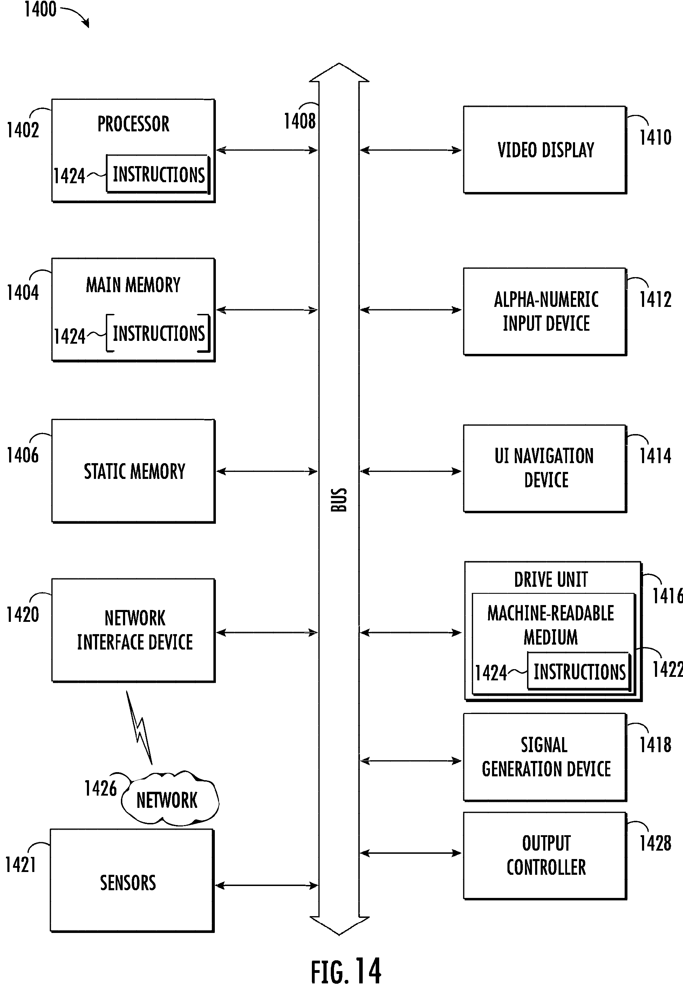

FIG. 14 illustrates a circuit block diagram of a computing machine 1400 in accordance with some embodiments. In some embodiments, components of the computing machine 1400 may store or be integrated into other components shown in the circuit block diagram of FIG. 14. For example, portions of the computing machine 1400 may reside in the processor 1402 and may be referred to as "processing circuitry." Processing circuitry may include processing hardware, for example, one or more central processing units (CPUs), one or more graphics processing units (GPUs), and the like. In alternative embodiments, the computing machine 1400 may operate as a standalone device or may be connected (e.g., networked) to other computers. In a networked deployment, the computing machine 1400 may operate in the capacity of a server, a client, or both in server-client network environments. In an example, the computing machine 1400 may act as a peer machine in peer-to-peer (P2P) (or other distributed) network environment. In this document, the phrases P2P, device-to-device (D2D) and sidelink may be used interchangeably. The computing machine 1400 may be a specialized computer, a personal computer (PC), a tablet PC, a personal digital assistant (PDA), a mobile telephone, a smart phone, a web appliance, a network router, switch or bridge, or any machine capable of executing instructions (sequential or otherwise) that specify actions to be taken by that machine.

Examples, as described herein, may include, or may operate on, logic or a number of components, modules, or mechanisms. Modules and components are tangible entities (e.g., hardware) capable of performing specified operations and may be configured or arranged in a certain manner. In an example, circuits may be arranged (e.g., internally or with respect to external entities such as other circuits) in a specified manner as a module. In an example, the whole or part of one or more computer systems/apparatus (e.g., a standalone, client or server computer system) or one or more hardware processors may be configured by firmware or software (e.g., instructions, an application portion, or an application) as a module that operates to perform specified operations. In an example, the software may reside on a machine readable medium. In an example, the software, when executed by the underlying hardware of the module, causes the hardware to perform the specified operations.

Accordingly, the term "module" (and "component") is understood to encompass a tangible entity, be that an entity that is physically constructed, specifically configured (e.g., hardwired), or temporarily (e.g., transitorily) configured (e.g., programmed) to operate in a specified manner or to perform part or all of any operation described herein. Considering examples in which modules are temporarily configured, each of the modules need not be instantiated at any one moment in time. For example, where the modules comprise a general-purpose hardware processor configured using software, the general-purpose hardware processor may be configured as respective different modules at different times. Software may accordingly configure a hardware processor, for example, to constitute a particular module at one instance of time and to constitute a different module at a different instance of time.

The computing machine 1400 may include a hardware processor 1402 (e.g., a central processing unit (CPU), a GPU, a hardware processor core, or any combination thereof), a main memory 1404 and a static memory 1406, some or all of which may communicate with each other via an interlink (e.g., bus) 1408. Although not shown, the main memory 1404 may contain any or all of removable storage and non-removable storage, volatile memory or non-volatile memory. The computing machine 1400 may further include a video display unit 1410 (or other display unit), an alphanumeric input device 1412 (e.g., a keyboard), and a user interface (UI) navigation device 1414 (e.g., a mouse). In an example, the display unit 1410, input device 1412 and UI navigation device 1414 may be a touch screen display. The computing machine 1400 may additionally include a storage device (e.g., drive unit) 1416, a signal generation device 1418 (e.g., a speaker), a network interface device 1420, and one or more sensors 1421, such as a global positioning system (GPS) sensor, compass, accelerometer, or other sensor. The computing machine 1400 may include an output controller 1428, such as a serial (e.g., universal serial bus (USB), parallel, or other wired or wireless (e.g., infrared (IR), near field communication (NFC), etc.) connection to communicate or control one or more peripheral devices (e.g., a printer, card reader, etc.).

The drive unit 1416 (e.g., a storage device) may include a machine readable medium 1422 on which is stored one or more sets of data structures or instructions 1424 (e.g, software) embodying or utilized by any one or more of the techniques or functions described herein. The instructions 1424 may also reside, completely or at least partially, within the main memory 1404, within static memory 1406, or within the hardware processor 1402 during execution thereof by the computing machine 1400. In an example, one or any combination of the hardware processor 1402, the main memory 1404, the static memory 1406, or the storage device 1416 may constitute machine readable media.

While the machine readable medium 1422 is illustrated as a single medium, the term "machine readable medium" may include a single medium or multiple media (e.g., a centralized or distributed database, and/or associated caches and servers) configured to store the one or more instructions 1424.

The term "machine readable medium" may include any medium that is capable of storing, encoding, or carrying instructions for execution by the computing machine 1400 and that cause the computing machine 1400 to perform any one or more of the techniques of the present disclosure, or that is capable of storing, encoding or carrying data structures used by or associated with such instructions. Non-limiting machine readable medium examples may include solid-state memories, and optical and magnetic media. Specific examples of machine readable media may include: non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magnetooptical disks; Random Access Memory (RAM); and CD-ROM and DVD-ROM disks. In some examples, machine readable media may include non-transitory machine readable media. In some examples, machine readable media may include machine readable media that is not a transitory propagating signal.

The instructions 1424 may further be transmitted or received over a communications network 1426 using a transmission medium via the network interface device 1420 utilizing any one of a number of transfer protocols (e.g., frame relay, internet protocol (IP), transmission control protocol (TCP), user datagram protocol (UDP), hypertext transfer protocol (HTTP), etc.). Example communication networks may include a local area network (LAN), a wide area network (WAN), a packet data network (e.g., the Internet), mobile telephone networks (e.g., cellular networks), Plain Old Telephone (POTS) networks, and wireless data networks (e.g., Institute of Electrical and Electronics Engineers (IEEE) 802.11 family of standards known as Wi-Fi®, IEEE 802.16 family of standards known as WiMax®), IEEE 802.15.4 family of standards, a Long Term Evolution (LTE) family of standards, a Universal Mobile Telecommunications System (UMTS) family of standards, peer-to-peer (P2P) networks, among others. In an example, the network interface device 1420 may include one or more physical jacks (e.g., Ethernet, coaxial, or phone jacks) or one or more antennas to connect to the communications network 1426.

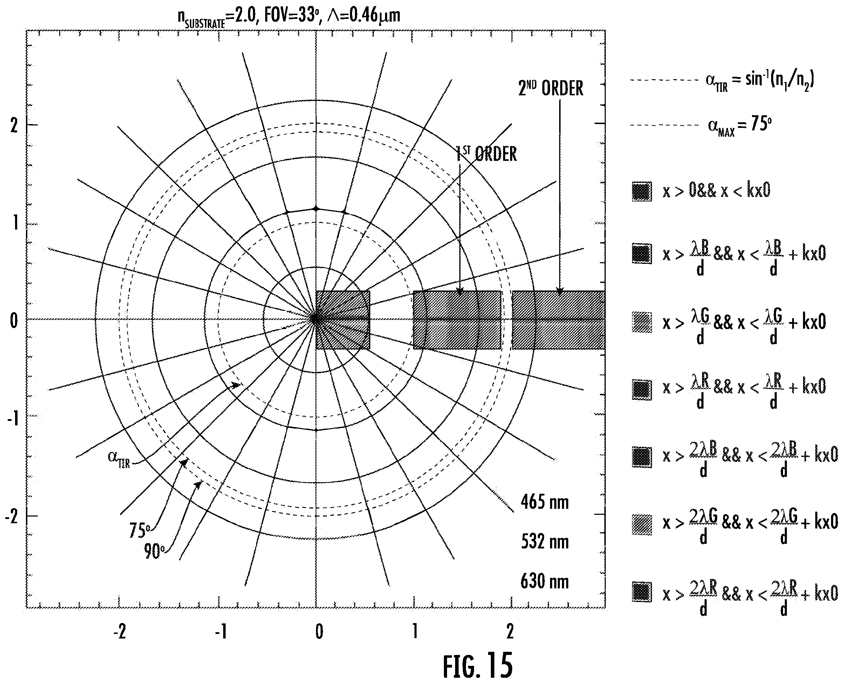

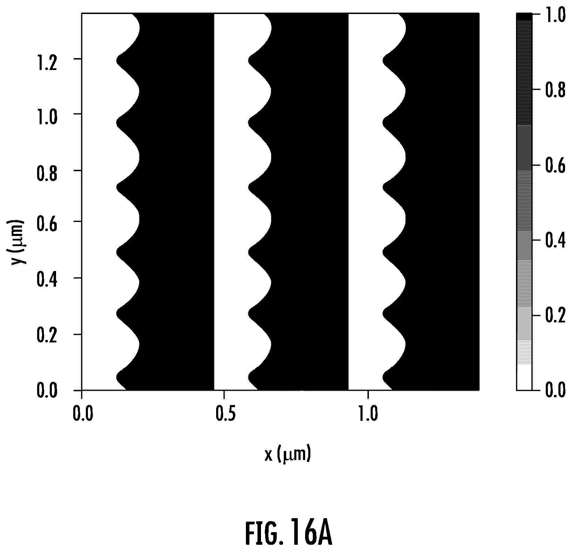

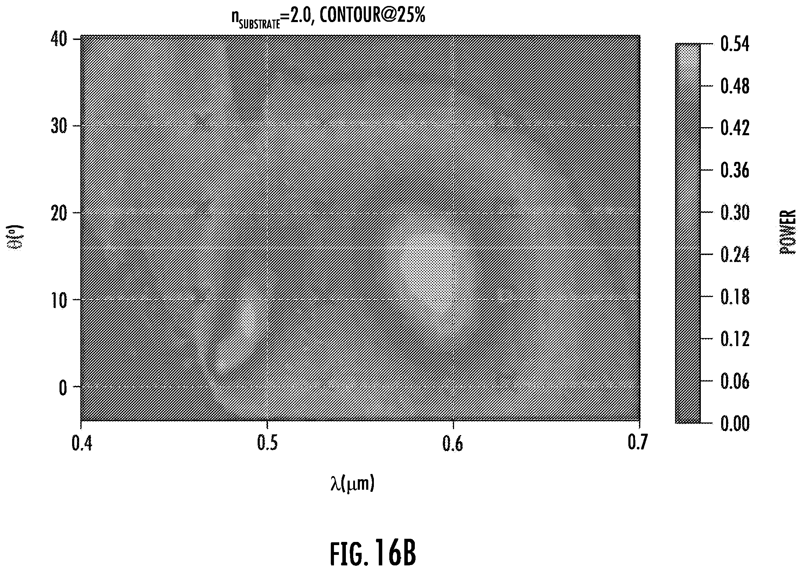

FIG. 15 illustrates example grating equations corresponding to an example maximal field of view with all three colors (red, green, and blue) guided. FIG. 16A illustrates an example inverse design grating structure of 200 nm TiO$_2$ (n=2.39) with air cladding. FIG. 16B illustrates the 25% coupling efficiency for all three colors with 30 degrees field of view using the grating structure of FIG. 16A.

**Claims**

1. A method (1300) comprising:

   accessing (1310), at a computer (1400), representations of a substrate (202) for a surface coupled to a display unit, one or more patterned layers adjacent to the substrate, an incident angle range, and an exit angle range of the substrate, wherein the substrate is transparent for a specified wavelength of light;
   computing (1320), using an optimization engine at the computer and for the specified wavelength of light, a two-dimensional or three-dimensional representation of a metasurface waveguide coupler element structure (200) based on a refractive index of the one or more patterned layers, a refractive index of the substrate, the incident angle range, and the exit angle range, wherein a period of the metasurface waveguide coupler element structure is determined using a waveguide coupler equation, wherein a portion of the substrate comprises multiple instances of the metasurface waveguide coupler element structure, wherein the period is a distance between adjacent instances of the metasurface waveguide coupler element structure, wherein the optimization engine leverages an electromagnetic field simulation engine to optimize the deflection efficiency of the metasurface waveguide coupler element structure by recursively manipulating the representation of the metasurface waveguide coupler element structure, wherein optimizing the deflection efficiency comprises maximizing the deflection efficiency for the specified wavelength of light for the incident angle range;
   transforming (1330), at the computer, the representation of the metasurface waveguide coupler element structure into a layout file for a fabrication machine; and
   transmitting (1340) the layout file to the fabrication machine.

2. The method of claim 1, wherein the waveguide coupler equation is $n_1 * \sin\theta + \frac{m\lambda}{d} = n_2 * \sin\alpha$ , wherein: $n_1$ and $n_2$ are the refractive index of an external material and the substrate, $\theta$ is an incident angle, $\alpha$ is an exit angle, $m$ is a metasurface waveguide coupler element order, $\lambda$ is the specified wavelength of light, and $d$ is the period.

3. The method of claim 1, wherein the display unit comprises an augmented reality (AR) or virtual reality (VR) display unit, the method further comprising:

   receiving, at the fabrication machine, the layout file; and
   fabricating, at the fabrication machine, the surface for coupling to the display unit in response to receiving the layout file.

4. The method of claim 1, further comprising:

   computing, using the optimization engine, multiple metasurface waveguide coupler element structures for multiple wavelengths of light; and
   transmitting, to the fabrication machine, layout files associated with each of the multiple metasurface waveguide coupler element structures, and preferably wherein the multiple wavelengths of light comprise one or more of: a wavelength of red light, a wavelength of green light, and a wavelength of blue light.

5. The method of claim 1, wherein the metasurface waveguide coupler element structure is computed based, at least in part, on a fabrication tolerance of the fabrication machine, and preferably
   removing, based on the fabrication tolerance, features smaller than a threshold size from the metasurface waveguide coupler element structure.

6. The method of claim 1, wherein the surface comprises a thin layer having a thickness less than one micron, for example wherein the thickness is between fifty and three-hundred-fifty nanometers.

7. The method of claim 1, wherein the surface comprises two height levels with one or more extrusions extending from a first height level to a second height level.

8. The method of claim 1, wherein the substrate provides support for a coating structure for a grating metasurface material and a background material, and preferably wherein the substrate includes metasurfaces on at least one outer part of the substrate.

9. The method of claim 1, wherein the substrate that is transparent for light of the specified wavelength, being transparent comprising having a loss less than a threshold loss value.

10. The method of claim 1, wherein the metasurface waveguide coupler element structure comprises a grating element structure.

11. The method of claim 1, further comprising:
accessing, at the computer, a thickness of the substrate and a radius of a curvature of the substrate, wherein the representation of the metasurface waveguide coupler element structure is computed based on the thickness and the radius.

12. The method of claim 1, wherein: (i) the representation of the metasurface waveguide coupler element structure is grid-based or contour-based; or (ii) the specified wavelength is between three-hundred-fifty and seven-hundred-fifty nanometers.

13. A computer (1400) comprising:

processing circuitry (1402), and
a memory (1404) storing instructions (1424) which, when executed by the processing circuitry, cause the processing circuitry to perform operations comprising:

accessing (1300), at the computer, representations of a substrate (202) for a surface coupled to a display unit, one or more patterned layers adjacent to the substrate, an incident angle range, and an exit angle range of the substrate, wherein the substrate is transparent for a specified wavelength of light;
computing (1320), using an optimization engine at the computer and for the specified wavelength of light, a two-dimensional or three-dimensional representation of a metasurface waveguide coupler element structure (200) based on a refractive index of the one or more patterned layers, a refractive index of the substrate, the incident angle range, and the exit angle range, wherein a period of the metasurface waveguide coupler element structure is determined using a waveguide coupler equation, wherein a portion of the substrate comprises multiple instances of the metasurface waveguide coupler element structure, wherein the period is a distance between adjacent instances of the metasurface waveguide coupler element structure, wherein the optimization engine leverages an electromagnetic field simulation engine to optimize the deflection efficiency of the metasurface waveguide coupler element structure by recursively manipulating the representation of the metasurface waveguide coupler element structure, wherein optimizing the deflection efficiency comprises maximizing the deflection efficiency for the specified wavelength of light for the incident angle range;
transforming (1330), at the computer, the representation of the metasurface waveguide coupler element structure into a layout file for a fabrication machine; and
transmitting (1340) the layout file to the fabrication machine.

14. A non-transitory computer-readable medium (1404) storing instructions (1424) which, when executed by a computer (1400), cause the computer to perform operations comprising:

accessing (1310), at the computer, representations of a substrate (202) for a surface coupled to a display unit, one or more patterned layers adjacent to the substrate, an incident angle range, and an exit angle range of the substrate, wherein the substrate is transparent for a specified wavelength of light;
computing (1320), using an optimization engine at the computer and for the specified wavelength of light, a two-dimensional or three-dimensional representation of a metasurface waveguide coupler element structure (200) based on a refractive index of the one or more patterned layers, a refractive index of the substrate, the incident angle range, and the exit angle range, wherein a period of the metasurface waveguide coupler element structure is determined using a waveguide coupler equation, wherein a portion of the substrate comprises multiple instances of the metasurface waveguide coupler element structure, wherein the period is a distance between adjacent instances of the metasurface waveguide coupler element structure, wherein the optimization engine leverages an electromagnetic field simulation engine to optimize the deflection efficiency of the metasurface waveguide coupler element structure by recursively manipulating the representation of the metasurface waveguide coupler element structure, wherein optimizing the deflection efficiency comprises maximizing the deflection efficiency for the specified wavelength of light for the incident angle range;

transforming (1330), at the computer, the representation of the metasurface waveguide coupler element structure into a layout file for a fabrication machine; and

transmitting (1340) the layout file to the fabrication machine.

**Patentansprüche**

1. Verfahren (1300), umfassend:

Zugreifen (1310) an einem Computer (1400) auf Darstellungen eines Substrats (202) für eine mit einer Anzeigeeinheit gekoppelten Oberfläche, einer oder mehreren gemusterten Schichten, die dem Substrat benachbart sind, eines Einfallswinkelbereichs und eines Austrittswinkelbereichs des Substrats, wobei das Substrat für eine spezifizierte Wellenlänge von Licht transparent ist;

Berechnen (1320) unter Verwendung einer Optimierungs-Engine an dem Computer und für die spezifizierte Wellenlänge von Licht einer zweidimensionalen oder dreidimensionalen Darstellung einer Metaoberflächen-Wellenleiterkopplerelementstruktur (200) auf Grundlage eines Brechungsindexes der einen oder mehreren gemusterten Schichten, eines Brechungsindexes des Substrats, des Einfallswinkelbereichs und des Austrittswinkelbereichs, wobei eine Periode der Metaoberflächen-Wellenleiterkopplerelementstruktur unter Verwendung einer Wellenleiterkopplergleichung bestimmt wird, wobei ein Abschnitt des Substrats mehrere Instanzen der Metaoberflächen-Wellenleiterkopplerelementstruktur umfasst, wobei die Periode ein Abstand zwischen benachbarten Instanzen der Metaoberflächen-Wellenleiterkopplerelementstruktur ist, wobei die Optimierungs-Engine eine Elektromagnetfeldsimulations-Engine nutzt, um die Ablenkeffizienz der Metaoberflächen-Wellenleiterkopplerelementstruktur durch rekursives Manipulieren der Darstellung der Metaoberflächen-Wellenleiterkopplerelementstruktur zu optimieren, wobei das Optimieren der Ablenkeffizienz das Maximieren der Ablenkeffizienz für die spezifizierte Wellenlänge von Licht für den Einfallswinkelbereich umfasst;

Transformieren (1330) an dem Computer der Darstellung der Metaoberflächen-Wellenleiterkopplerelementstruktur in eine Layoutdatei für eine Fertigungsmaschine; und

Übertragen (1340) der Layoutdatei an die Fertigungsmaschine.

2. Verfahren nach Anspruch 1, wobei die Wellenleiterkopplergleichung $n_1 * \sin\theta + \dfrac{m\lambda}{d} = n_2 * \sin\alpha$ ist, wobei: $n_1$ und $n_2$ der Brechungsindex eines externen Materials und des Substrats sind, $\theta$ ein Einfallswinkel ist, $\alpha$ ein Austrittswinkel ist, $m$ eine Metaoberflächen-Wellenleiterkopplerelementordnung ist, $\lambda$ die spezifizierte Wellenlänge von Licht ist und d die Periode ist.

3. Verfahren nach Anspruch 1, wobei die Anzeigeeinheit eine erweiterte Realität- (AR-) oder virtuelle Realität- (VR-) Anzeigeeinheit umfasst, das Verfahren ferner umfassend:

Empfangen der Layoutdatei an der Fertigungsmaschine; und
Fertigen der Oberfläche zum Koppeln an die Anzeigeeinheit als Reaktion auf Empfangen der Layoutdatei an der Fertigungsmaschine.

4. Verfahren nach Anspruch 1, ferner umfassend:

Berechnen unter Verwendung der Optimierungs-Engine mehrerer Metaoberflächen-Wellenleiterkopplerelementstrukturen für mehrere Wellenlängen von Licht; und
Übertragen von Layoutdateien an die Fertigungsmaschine, die mit jeder der mehreren Metaoberflächen-Wellenleiterkopplerelementstrukturen assoziiert sind, und wobei die mehreren Wellenlängen von Licht vorzugsweise eines oder mehrere von Folgendem umfassen: eine Wellenlänge von rotem Licht, eine Wellenlänge von grünem Licht und eine Wellenlänge von blauem Licht.

**5.** Verfahren nach Anspruch 1, wobei die Metaoberflächen-Wellenleiterkopplerelementstruktur zumindest teilweise auf Grundlage einer Fertigungstoleranz der Fertigungsmaschine berechnet wird, und vorzugsweise Entfernen auf Grundlage der Fertigungstoleranz von Merkmalen, die kleiner als eine Schwellengröße sind, aus der Metaoberflächen-Wellenleiterkopplerelementstruktur.

**6.** Verfahren nach Anspruch 1, wobei die Oberfläche eine dünne Schicht mit einer Dicke von weniger als einem Mikrometer umfasst, zum Beispiel, wobei die Dicke zwischen fünfzig und dreihundertfünfzig Nanometern liegt.

**7.** Verfahren nach Anspruch 1, wobei die Oberfläche zwei Höhenniveaus mit einem oder mehreren Extrusionen umfasst, die sich von einem ersten Höhenniveau zu einem zweiten Höhenniveau erstrecken.

**8.** Verfahren nach Anspruch 1, wobei das Substrat Stütze für eine Beschichtungsstruktur für ein Gitter-Metaoberflächenmaterial und ein Hintergrundmaterial bereitstellt, und wobei das Substrat bevorzugt Metaoberflächen auf zumindest einem äußeren Teil des Substrats einschließt.

**9.** Verfahren nach Anspruch 1, wobei das Substrat, das für Licht der spezifizierten Wellenlänge transparent ist, transparent ist und umfassend mit einem Verlust, der geringer als ein Schwellenverlustwert ist.

**10.** Verfahren nach Anspruch 1, wobei die Metaoberflächen-Wellenleiterkopplerelementstruktur eine Gitterelementstruktur umfasst.

**11.** Verfahren nach Anspruch 1, ferner umfassend:
Zugreifen an dem Computer auf eine Dicke des Substrats und einen Radius einer Krümmung des Substrats, wobei die Darstellung der Metaoberflächen-Wellenleiterkopplerelementstruktur auf Grundlage der Dicke und des Radius berechnet wird.

**12.** Verfahren nach Anspruch 1, wobei: (i) die Darstellung der Metaoberflächen-Wellenleiterkopplerelementstruktur gitterbasiert oder konturbasiert ist; oder (ii) die spezifizierte Wellenlänge zwischen dreihundertfünfzig und siebenhundertfünfzig Nanometern liegt.

**13.** Computer (1400), umfassend:

Verarbeitungsschaltungen (1402) und
einen Speicher (1404), der Anweisungen (1424) speichert, welche, wenn durch die Verarbeitungsschaltungen ausgeführt,
die Verarbeitungsschaltungen veranlassen, Operationen durchzuführen, umfassend: Zugreifen (1300)
an dem Computer auf Darstellungen eines Substrats (202) für eine Oberfläche, die an eine Anzeigeeinheit gekoppelt ist, einer oder mehrerer gemusterter Schichten, die dem Substrat benachbart sind, eines Einfallswinkelbereichs und eines Austrittswinkelbereichs des Substrats, wobei das Substrat für eine spezifizierte Wellenlänge von Licht transparent ist;
Berechnen (1320)
unter Verwendung einer Optimierungs-Engine an dem Computer und für die spezifizierte Lichtwellenlänge einer zweidimensionalen oder dreidimensionalen Darstellung einer Metaoberflächen-Wellenleiterkopplerelementstruktur (200) auf Grundlage eines Brechungsindexes der einen oder mehreren gemusterten Schichten, eines Brechungsindexes des Substrats, des Einfallswinkelbereichs und des Austrittswinkelbereichs, wobei eine Periode der Metaoberflächen-Wellenleiterkopplerelementstruktur unter Verwendung einer Wellenleiterkopplergleichung bestimmt wird, wobei ein Abschnitt des Substrats mehrere Instanzen der Metaoberflächen-Wellenleiterkopplerelementstruktur umfasst, wobei die Periode ein Abstand zwischen benachbarten Instanzen der Metaoberflächen-Wellenleiterkopplerelementstruktur ist, wobei die Optimierungs-Engine eine Elektromagnetfeldsimulations-Engine nutzt, um die Ablenkeffizienz der Metaoberflächen-Wellenleiterkopplerelementstruktur durch rekursives Manipulieren der Darstellung der Metaoberflächen-Wellenleiterkopplerelementstruktur zu optimieren, wobei das Optimieren der Ablenkeffizienz das Maximieren der Ablenkeffizienz für die spezifizierte Lichtwellenlänge für den Einfallswinkelbereich umfasst;
Transformieren (1330) an dem Computer der Darstellung der Metaoberflächen-Wellenleiterkopplerelementstruktur in eine Layoutdatei für eine Fertigungsmaschine; und
Übertragen (1340) der Layoutdatei an die Fertigungsmaschine.

**14.** Nichtflüchtiges computerlesbares Medium (1404), das Anweisungen (1424) speichert, welche, wenn durch einen Computer (1400) ausgeführt,

veranlassen, dass der Computer Operationen durchführt, umfassend:
Zugreifen (1310) an dem Computer auf Darstellungen eines Substrats (202) für eine Oberfläche, die an eine Anzeigeeinheit gekoppelt ist, einer oder mehrerer gemusterter Schichten, die dem Substrat benachbart sind, eines Einfallswinkelbereichs und eines Austrittswinkelbereichs des Substrats, wobei das Substrat für eine spezifizierte Wellenlänge von Licht transparent ist;
Berechnen (1320) unter Verwendung einer Optimierungs-Engine an dem Computer und für die spezifizierte Wellenlänge von Licht einer zweidimensionalen oder dreidimensionalen Darstellung einer Metaoberflächen-Wellenleiterkopplerelementstruktur (200) auf Grundlage eines Brechungsindexes der einen oder mehreren gemusterten Schichten, eines Brechungsindexes des Substrats, des Einfallswinkelbereichs und des Austrittswinkelbereichs, wobei eine Periode der Metaoberflächen-Wellenleiterkopplerelementstruktur unter Verwendung einer Wellenleiterkopplergleichung bestimmt wird, wobei ein Abschnitt des Substrats mehrere Instanzen der Metaoberflächen-Wellenleiterkopplerelementstruktur umfasst, wobei die Periode ein Abstand zwischen benachbarten Instanzen der Metaoberflächen-Wellenleiterkopplerelementstruktur ist, wobei die Optimierungs-Engine eine Elektromagnetfeldsimulations-Engine nutzt, um die Ablenkeffizienz der Metaoberflächen-Wellenleiterkopplerelementstruktur durch rekursives Manipulieren der Darstellung der Metaoberflächen-Wellenleiterkopplerelementstruktur zu optimieren, wobei das Optimieren der Ablenkeffizienz das Maximieren der Ablenkeffizienz für die spezifizierte Wellenlänge von Licht für den Einfallswinkelbereich umfasst;
Transformieren (1330) an dem Computer der Darstellung der Metaoberflächen-Wellenleiterkopplerelementstruktur in eine Layoutdatei für eine Fertigungsmaschine; und
Übertragen (1340) der Layoutdatei an die Fertigungsmaschine.

## Revendications

1. Méthode (1300) comprenant :

l'accès (1310), au niveau d'un ordinateur (1400), à des représentations d'un substrat (202) pour une surface couplée à une unité d'affichage, d'une ou plusieurs couches à motifs adjacentes au substrat, d'une plage d'angles d'incidence et d'une plage d'angles de sortie du substrat, dans laquelle le substrat est transparent pour une longueur d'onde de lumière spécifiée ;
le calcul (1320), à l'aide d'un moteur d'optimisation au niveau de l'ordinateur et pour la longueur d'onde de lumière spécifiée, d'une représentation bidimensionnelle ou tridimensionnelle d'une structure d'élément de coupleur de guide d'ondes à métasurface (200) sur la base d'un indice de réfraction de l'une ou plusieurs couches à motifs, d'un indice de réfraction du substrat, de la plage d'angles d'incidence et de la plage d'angles de sortie, dans laquelle une période de la structure d'élément de coupleur de guide d'ondes à métasurface est déterminée à l'aide d'une équation de coupleur de guide d'ondes, dans laquelle une partie du substrat comprend de multiples instances de la structure d'élément de coupleur de guide d'ondes à métasurface, dans laquelle la période est une distance entre des instances adjacentes de la structure d'élément de coupleur de guide d'ondes à métasurface, dans laquelle le moteur d'optimisation exploite un moteur de simulation de champ électromagnétique pour optimiser l'efficacité de déflexion de la structure d'élément de coupleur de guide d'ondes à métasurface en manipulant de manière récursive la représentation de la structure d'élément de coupleur de guide d'ondes à métasurface, dans laquelle l'optimisation de l'efficacité de déflexion comprend la maximisation de l'efficacité de déflexion pour la longueur d'onde de lumière spécifiée pour la plage d'angles d'incidence ;
la transformation (1330), au niveau de l'ordinateur, de la représentation de la structure d'élément de coupleur de guide d'ondes à métasurface dans un fichier d'implantation pour une machine de fabrication ; et
la transmission (1340) du fichier d'implantation à la machine de fabrication.

2. Méthode de la revendication 1, dans laquelle l'équation de coupleur de guide d'ondes est $n_1 * \sin\theta + \frac{m\lambda}{d} = n_2 * \sin\alpha$, dans laquelle : $n_1$ et $n_2$ sont l'indice de réfraction d'un matériau externe et du substrat, $\theta$ est un angle d'incidence, $\alpha$ est un angle de sortie, m est un ordre d'élément de coupleur de guide d'ondes à métasurface, $\lambda$ est la longueur d'ondes de lumière spécifiée, et $d$ est la période.

3. Méthode de la revendication 1, dans laquelle l'unité d'affichage comprend une unité d'affichage de réalité augmentée (AR) ou de réalité virtuelle (VR), la méthode comprenant en outre :

la réception, au niveau de la machine de fabrication, du fichier d'implantation ; et

la fabrication, au niveau de la machine de fabrication, de la surface à coupler à l'unité d'affichage en réponse à la réception du fichier d'implantation.

4. Méthode de la revendication 1, comprenant en outre :

le calcul, à l'aide du moteur d'optimisation, de multiples structures d'éléments de coupleur de guide d'ondes à métasurface pour de multiples longueurs d'onde de lumière ; et

la transmission, à la machine de fabrication, des fichiers d'implantation associés à chacune des multiples structures d'éléments de coupleur de guide d'ondes à métasurface, et de préférence dans laquelle les multiples longueurs d'onde de lumière comprennent une ou plusieurs parmi : une longueur d'onde de lumière rouge, une longueur d'onde de lumière verte et une longueur d'onde de lumière bleue.

5. Méthode de la revendication 1, dans laquelle la structure d'élément de coupleur de guide d'ondes à métasurface est calculée sur la base, au moins en partie, d'une tolérance de fabrication de la machine de fabrication, et de préférence l'élimination, sur la base de la tolérance de fabrication, des caractéristiques inférieures à une taille de seuil de la structure d'élément de coupleur de guide d'ondes à métasurface.

6. Méthode de la revendication 1, dans laquelle la surface comprend une couche mince ayant une épaisseur inférieure à un micron, par exemple dans laquelle l'épaisseur est comprise entre cinquante et trois cent cinquante nanomètres.

7. Méthode de la revendication 1, dans laquelle la surface comprend deux niveaux de hauteur avec une ou plusieurs extrusions s'étendant d'un premier niveau de hauteur à un second niveau de hauteur.

8. Méthode de la revendication 1, dans laquelle le substrat fournit un support pour une structure de revêtement pour un matériau de métasurface de réseau et un matériau de fond, et de préférence dans laquelle le substrat comprend des métasurfaces sur au moins une partie extérieure du substrat.

9. Méthode de la revendication 1, dans laquelle le substrat qui est transparent pour la lumière de la longueur d'onde spécifiée, étant transparente, comprend le fait de présenter une perte inférieure à une valeur de perte de seuil.

10. Méthode de la revendication 1, dans laquelle la structure d'élément de coupleur de guide d'ondes à métasurface comprend une structure d'élément de réseau.

11. Méthode de la revendication 1, comprenant en outre :
l'accès, au niveau de l'ordinateur, à une épaisseur du substrat et à un rayon d'une courbure du substrat, dans laquelle la représentation de la structure d'élément de coupleur de guide d'ondes à métasurface est calculée sur la base de l'épaisseur et du rayon.

12. Méthode de la revendication 1, dans laquelle : (i) la représentation de la structure d'élément de coupleur de guide d'ondes à métasurface est à base de grille ou à base de contour ; ou (ii) la longueur d'onde spécifiée est comprise entre trois cent cinquante et sept cent cinquante nanomètres.

13. Ordinateur (1400) comprenant :

un circuit de traitement (1402), et

une mémoire (1404) stockant des instructions (1424) qui, lorsqu'elles sont exécutées par le circuit de traitement, amènent le circuit de traitement à réaliser des opérations comprenant :

l'accès (1300), au niveau de l'ordinateur, à des représentations d'un substrat (202) pour une surface couplée à une unité d'affichage, d'une ou plusieurs couches à motifs adjacentes au substrat, d'une plage d'angles d'incidence et d'une plage d'angles de sortie du substrat, dans lequel le substrat est transparent pour une longueur d'onde de lumière spécifiée ;

le calcul (1320), à l'aide d'un moteur d'optimisation au niveau de l'ordinateur et pour la longueur d'onde de lumière spécifiée, d'une représentation bidimensionnelle ou tridimensionnelle d'une structure d'élément de coupleur de guide d'ondes à métasurface (200) sur la base d'un indice de réfraction de l'une ou plusieurs couches à motifs, d'un indice de réfraction du substrat, de la plage d'angles d'incidence et de la plage d'angles de sortie, dans lequel une période de la structure d'élément de coupleur de guide d'ondes à métasurface est déterminée à l'aide d'une équation de coupleur de guide d'ondes, dans lequel une partie du substrat comprend de multiples instances de la structure d'élément de coupleur de guide d'ondes à métasurface, dans lequel la période est une distance entre des instances adjacentes de la structure d'élément de coupleur de guide d'ondes à métasurface, dans lequel le moteur d'optimisation exploite un moteur de simulation de champ électromagnétique pour optimiser l'efficacité de déflexion de la structure d'élément de coupleur de guide d'ondes à métasurface en manipulant de manière récursive la représentation de la structure d'élément de coupleur de guide d'ondes à métasurface, dans lequel l'optimisation de l'efficacité de déflexion comprend la maximisation de l'efficacité de déflexion pour la longueur d'onde de lumière spécifiée pour la plage d'angles d'incidence ;

la transformation (1330), au niveau de l'ordinateur, de la représentation de la structure d'élément de coupleur de guide d'ondes à métasurface dans un fichier d'implantation pour une machine de fabrication ; et

la transmission (1340) du fichier d'implantation à la machine de fabrication.

**14.** Support non transitoire lisible par ordinateur (1404) stockant des instructions (1424) qui, lorsqu'elles sont exécutées par un ordinateur (1400), amènent l'ordinateur à effectuer des opérations comprenant :

l'accès (1310) à, au niveau de l'ordinateur, des représentations d'un substrat (202) pour une surface couplée à une unité d'affichage, une ou plusieurs couches à motifs adjacentes au substrat, une plage d'angles d'incidence et une plage d'angles de sortie du substrat, dans lequel le substrat est transparent pour une longueur d'onde de lumière spécifiée ;

le calcul (1320), à l'aide d'un moteur d'optimisation au niveau de l'ordinateur et pour la longueur d'onde de lumière spécifiée, d'une représentation bidimensionnelle ou tridimensionnelle d'une structure d'élément de coupleur de guide d'ondes à métasurface (200) sur la base d'un indice de réfraction de l'une ou plusieurs couches à motifs, d'un indice de réfraction du substrat, de la plage d'angles d'incidence et de la plage d'angles de sortie, dans lequel une période de la structure d'élément de coupleur de guide d'ondes à métasurface est déterminée à l'aide d'une équation de coupleur de guide d'ondes, dans lequel une partie du substrat comprend de multiples instances de la structure d'élément de coupleur de guide d'ondes à métasurface, dans lequel la période est une distance entre des instances adjacentes de la structure d'élément de coupleur de guide d'ondes à métasurface, dans lequel le moteur d'optimisation exploite un moteur de simulation de champ électromagnétique pour optimiser l'efficacité de déflexion de la structure d'élément de coupleur de guide d'ondes à métasurface en manipulant de manière récursive la représentation de la structure d'élément de coupleur de guide d'ondes à métasurface, dans lequel l'optimisation de l'efficacité de déflexion comprend la maximisation de l'efficacité de déflexion pour la longueur d'onde de lumière spécifiée pour la plage d'angles d'incidence ;

la transformation (1330), au niveau de l'ordinateur, de la représentation de la structure d'élément de coupleur de guide d'ondes à métasurface dans un fichier d'implantation pour une machine de fabrication ; et

la transmission (1340) du fichier d'implantation à la machine de fabrication.

FIG. 1A

FIG. 1B

FIG. 2A

FIG. 2B

FIG. 3A

HEIGHT = 0.200 um

FIG. 3B

**FIG. 3C**

HEIGHT = 0.200 um

**FIG. 3D**

FIG. 4A

HEIGHT = 0.200 um

FIG. 4B

FIG. 5A

$\theta_{MAX}$, 1ST ORDER
$\theta_{MAX}$, 1ST ORDER
$\theta_{MAX}$, 2ND ORDER
$\theta_{MAX}$, 2ND ORDER

FIG. 5B

FIG. 6A

FIG. 6B

FIG. 6C

EP 4 430 447 B1

FIG. 7A

FIG. 7B

FIG. 7C

FIG. 7D

FIG.8

FIG. 9

1002
TEMPLATE

1004
RESIST THIN
FILM (TiO$_2$)
SUBSTRATE

1006
RIE ETCHING

FIG. 10

0.888 μm    0.197 μm

0.393 μm

FIG. 11A

0.3274 μm

0.3871 μm

0.8793 μm

0.1964 μm

FIG. 11B

488 nm

FIG. 11C

HEIGHT = 0.200 um

FIG. 11D

1204A

1202A

1206A

FIG. 12A

1204B

1202B

1206B

FIG. 12B

1300

ACCESS, AT A COMPUTER, REPRESENTATIONS OF A SUBSTRATE FOR A SURFACE COUPLED TO A DISPLAY UNIT, ONE OR MORE PATTERNED LAERS ADJACENT TO THE SUBSTRATE, AN INCIDENT ANGLE RANGE, AND AN EXIT ANGLE RANGE OF THE SUBSTRATE, WHEREIN THE SUBSTRATE IS TRANSPARENT FOR A SPECIFIED WAVELENGTH OF LIGHT ∿1310

COMPUTE, USING AN OPTIMIZATION ENGINE AT THE COMPUTER AND FOR THE SPECIFIED WAVELENGTH OF LIGHT, A TWO-DIMENSIONAL OR THREE-DIMENSIONAL REPRESENTATION OF A METASURFACE WAVEGUIDE COUPLER ELEMENT STRUCTURE BASED ON A REFRACTIVE INDEX OF THE ONE R MORE PATTERNED LAYERS, A REFRACTIVE INDEX OF THE SUBSTRATE, THE INCIDENT ANGLE RANGE, AND THE EXIT ANGLE RANGE, WHEREIN A PERIOD OF THE METASURFACE WAVEGUIDE COUPLER ELEMENT STRUCTURE IS DETERMINED USING A WAVEGUIDE COUPLER EQUATION, WHEREIN A PORTION OF THE SUBSTRATE COMPRISES MULTIPLE INSTANCES OF THE METASURFACE WAVEGUIDE COUPLER ELEMENT STRUCTURE, WHEREIN THE PERIOD IS A DISTANCE BETWEEN ADJACENT INSTANCES OF THE METASURFACE WAVEGUIDE COUPLER ELEMENT STRUCTURE, WHEREIN THE OPTIMIZATION ENGINE LEVERAGES AN ELECTROMAGNETIC FIELD SIMULATION ENGINE TO OPTIMIZE THE DEFLECTION EFFICIENCY OF THE METASURFACE WAVEGUIDE COUPLER ELEMENT STRUCTURE BY RECURSIVELY MANIPULATING THE REPRESENTATION OF THE METASURFACE WAVEGUIDE COUPLER ELEMENT STRUCTURE, WHEREIN OPTIMIZING THE DEFLECTION EFFICIENCY COMPRISES MAXIMIZING THE DEFLECTION EFFICIENCY FOR THE SPECIFIED WAVELENGTH OF LIGHT FOR THE INCIDENT ANGLE RANGE ∿1320

TRANSFORM, AT THE COMPUTER, THE REPRESENTATION OF THE METASURFACE WAVEGUIDE COUPLER ELEMENT STRUCTURE INTO A LAYOUT FILE FOR A FABRICATION MACHINE ∿1330

TRANSMIT THE LAYOUT FILE TO THE 1340 FABRICATION MACHINE ∿1340

FIG. 13

FIG. 14

FIG. 15

FIG. 16A

FIG. 16B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Angle-multiplexed metasurfaces: encoding independent wavefronts in a single metasurface under different illumination angles. **SEYEDEH MAHSA KAMALI et al.** ARXIV.ORG. Cornell University Library, 07 November 2017